(19) **Europäisches Patentamt**
**European Patent Office**
**Office européen des brevets**

(11) **EP 4 397 399 A2**

(12) **EUROPEAN PATENT APPLICATION**

(43) Date of publication:
**10.07.2024 Bulletin 2024/28**

(21) Application number: **24176907.4**

(22) Date of filing: **26.03.2019**

(51) International Patent Classification (IPC):
***B01D 71/02*** *(2006.01)*

(52) Cooperative Patent Classification (CPC):
**B01D 69/148; B01D 67/0079; B01D 67/00791;
B01D 69/02; B01D 69/105; B01D 71/028;
B01J 20/226; B01J 20/28033; B01J 20/3204;
B01J 20/321; B01J 20/3212; B01J 20/3265;**
B01D 61/027; B01D 2323/34; B01D 2323/345;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018 GB 201805261**

(62) Document number(s) of the earlier application(s) in
accordance with Art. 76 EPC:
**19716223.3 / 3 774 001**

(71) Applicant: **G2O Water Technologies Limited
Manchester M3 3WR (GB)**

(72) Inventor: **LIU, Kangsheng
Derby, DE55 3BU (GB)**

(74) Representative: **Appleyard Lees IP LLP
15 Clare Road
Halifax HX1 2HY (GB)**

Remarks:
This application was filed on 20.05.2024 as a
divisional application to the application mentioned
under INID code 62.

(54) **MEMBRANES COMPRISING A LAYER OF METAL ORGANIC FRAMEWORK PARTICLES**

(57) There is described a filtration membrane. The membrane comprising a porous substrate layer and an active layer arranged over at least a part of the substrate layer. The active layer comprises a metal-organic frame-work (MOF). There is also described methods for of producing a filtration membrane and uses of the filtration membrane for water treatment.

**EP 4 397 399 A2**

(52) Cooperative Patent Classification (CPC): (Cont.)
    B01D 2325/20

**Description**

**FIELD**

The present invention relates to membranes. More specifically, the present invention relates to membranes comprising metal-organic frameworks (MOFs) or microporous coordination polymers for water treatment.

**BACKGROUND**

Conventional methods of water treatment such as chemical disinfection, solar disinfection, boiling, sedimentation and distillation are not sufficient to meet portable water requirement of the world's population at low cost. In order to tackle the problem, more advanced technologies have been established and industrialised, such as pressure driven membrane-based water treatment technologies which in general include ultrafiltration (UF), microfiltration (MF), nanofiltration (NF), and reverse osmosis (RO). By providing the advantages of circumventing the application of thermal inputs, chemical additives and reducing medium regeneration, these methods have significantly improved water treatment industry. However, is it still desirable to provide functional membranes with further improved properties such as high sieving electivity, low energy cost, and higher water flux rate for sustainable water treatment and modern water treatment industry.

MOFs can provide porous structures. However, these materials can present problems in relation to scalability, as well the high cost of the manufacturing processes.

Properties of membranes for water treatment should include high mechanical and thermal stability, good chemical and fouling resistance with cleanability, expanded life span, high controllable sieving selectivity and high permeability for desired molecule separation. Membranes should also be commercially accessible, such as, requiring low energy input, low material and manufacturing costs, high industrial scalability, and reasonable lead periods to commercialisation.

Therefore, there is a requirement for improved membranes for efficient water treatment. It is therefore an object of aspects of the present invention to address one or a few of the problems mentioned above or other problems.

**SUMMARY**

According to a first aspect of the present invention, there is provided a filtration membrane, the membrane comprising a porous substrate layer and an active layer arranged over at least a part of the substrate layer, wherein the active layer comprises a metal-organic framework.

Suitably, the filtration membrane is for water filtration, water desalination, molecule separation, ion sieving selection, protein separation, and/or contaminates adsorption. Preferably, the membrane is for water filtration.

According to a second aspect of the present invention there is provided a method of producing a filtration membrane, suitably a membrane according to the first aspect of the present invention, wherein the membrane comprises a porous substrate layer and an active layer arranged over at least a part of the substrate layer, wherein the active layer comprises a metal-organic framework (MOF), the method comprising the steps of:

    a. optionally preparing the substrate

    b. contacting the substrate with a coating composition comprising the MOF;

    c. optionally, drying the membrane.

According to a third aspect of the present invention, there is provided a filtration membrane, suitably a membrane according to the first aspect of the present invention, wherein the membrane comprises a porous substrate layer and an active layer arranged over at least a part of the substrate layer, wherein the active layer comprises a metal-organic framework (MOF), wherein the filtration membrane is formed from a method comprising the steps of:

    a. optionally preparing the substrate

    b. contacting the substrate with a coating composition comprising the MOF ;

    c. optionally, drying the membrane.

According to a further aspect of the present invention there is provided a method of producing a filtration membrane, suitably a membrane according to any other aspect of the present invention, wherein the membrane comprises a porous substrate layer and an active layer arranged over at least a part of the substrate layer, wherein the active layer comprises a metal-organic framework (MOF), the method comprising the steps of:

    a. optionally treating the substrate

    b. printing a coating composition comprising the MOF onto the substrate;

    c. optionally, drying the membrane.

According to a further aspect of the present invention there is provided a method of producing a filtration membrane, suitably a membrane according to any other aspect of the present invention, wherein the membrane comprises a porous substrate layer and an active layer arranged over at least a part of the substrate layer, wherein the active layer comprises a metal-organic framework (MOF), the method comprising the steps of:

    a. optionally treating the substrate

    b. deposition, such as gravity, vacuum or pressure deposition, of a coating composition comprising the MOF onto the substrate;

    c. optionally, drying the membrane.

According to a further aspect of the present invention there is provided a coating composition for use in the manufacture of filtration membranes, suitably for use in the deposition, such as gravity/pressure/vacuum deposition, or printing of filtration membranes, the composition comprising at least one metal-organic framework material or precursor thereof.

The substrate layer of any aspect of the present invention may comprise any porous material operable to support the active layer during the filtration process. The substrate may comprise one layer or multiple layers.

The substrate may be a polymeric substrate, a ceramic substrate, a composite substrate, such as a thin film composite substrate, an inorganic-organic substrate and/or a metal substrate. Preferably a ceramic substrate or a polymeric substrate such as a polysulphone or polyamide substrate, or a zeolite or alumina substrate, most preferably a polymeric substrate.

The substrate may be in the form of a porous film, porous plate, porous hollow fibre substrate, and/or bulky porous material. Suitably the substrate is in the form of a porous film.

The porous film may be selected from ceramic porous films, polymeric porous films and inorganic-organic porous films.

A ceramic porous substrate may be formed from materials selected from one or more of zeolite, silicon, silica, alumina, zirconia, mullite, bentonite and montmorillonite clay substrate.

A polymeric porous substrate may be formed from materials selected from one or more of polyacrylonitrile (PAN), polyethylene terephthalate (PET), polycarbonate (PC), polyamide (PA), polysulphone poly(ether) sulfone (PES), cellulose acetate (CA), poly(piperazine-amide), polyvinylidene fluoride (PVDF), polytetrafluoroethylene (PTFE), poly(phthalazinone ether sulfone ketone) (PPESK), polyamide-urea, poly (ether ether ketone), polypropylene, poly(phthalazinone ether ketone), and thin film composite porous films (TFC), suitably the TFC comprises an ultra-thin 'barrier' layer polymerised in situ over a porous polymeric support membrane, such as commercially available polyamide derived TFCs of an interfacially synthesized polyamide formed over a polysulphone membrane, and/or others TFCs such as poly(piperazine-amide)/poly(vinyl-alcohol) (PVA), poly(piperazine-amide)/poly(phthalazinone biphenyl ether sulfone (PPBES), hydrolyzed cellulose triacetate (CTA)/Cellulose acetate (CA) TFCs.

The porous substrate may be a nanotechnology-based porous substrate, such as nanostructured ceramic porous substrate, inorganic-organic porous substrate and/or non-woven nano-porous fabric.

The nanostructured ceramic porous substrate may be formed of two or more layers, suitably a first layer comprising a conventional pressure driven ceramic material, such as one or more of zeolite, titanium oxide, alumina, zirconia, etc., suitably with a second layer extending over at least a portion of the first layer, the second layer may be synthesized zeolite, titanium oxide, alumina, such as via hydrothermal crystallisation or dry gel conversion methods. Other nanostructured ceramic porous substrates may be reactive or catalyst coated ceramic surfaced substrates. Such substrates may advantageously lead to strong interaction with the active layer and improve the stability of the filters.

An inorganic-organic porous substrate may be formed from inorganic particles contained in a porous organic polymeric substrate. An inorganic-organic porous substrate may be formed from materials selected from zirconia nanoparticles with polysulphone porous membrane. Advantageously, an inorganic-organic porous substrate may provide a combination of an easy to manufacture low cost substrate having good mechanical strength. An inorganic-organic porous substrate, such as zirconia nanoparticles with polysulphone may advantageously provide elevated permeability. Other inorganic-organic porous substrates may be selected from thin film nanocomposite substrates comprising one or more type of inorganic particle; metal based foam (such as aluminium foam, copper foam, lead foam, zirconium foam, stannum foam, and gold foam); mixed matrix substrates comprising inorganic fillers in an organic matrix to form organic-inorganic mixed matrix.

The porous substrate may comprise a non-woven nano fabric. Advantageously, a non-woven nano fabric provides high porosity, high surface area, and/or controllable functionalities. The non-woven fabric may comprise fibres with diameter at nanoscale. The non-woven fabric may be formed of cellulose acetate, cellulose, polyethylene terephthalate (PET), polyolefins such as polyethylene and polypropylene, and/or polyurethane, suitably by electrospinning, suitably using cellulose acetate, polyurethane, etc.

The substrate may be manufactured as flat sheet stock, plates or as hollow fibres and then made into one of the several types of membrane substrates, such as hollow-fibre substrate, or spiral-wound membrane substrate. Suitable flat sheet substrates may be obtained from Dow Filmtec and GE Osmonics.

Advantageously, a substrate in the form of a porous polymeric substrate can provide improved ease in processing and/or low cost.

The substrate layer may have any suitable pore size. The average size of the pores of the substrate may be from 0.1 nm to Sum depending on application, preferably from 0.1 to 1000nm. The substrate is typically a microporous membrane or an ultrafiltration membrane, preferable an ultrafiltration membrane. The pore size of the substrate layer may be from 0.1 nm to 4000 nm, such as ≤3000 nm, or ≤ 2000 nm, ≤1000nm or ≤500nm, such as ≤250nm, ≤100nm, ≤50nm or ≤1 nm. Preferably, the pore size of the substrate is smaller than the average size of the particles of the two-dimensional material. For example, should the metal-organic framework materials be in the form of flakes having average size of 200 nm, the pore size of the porous substrate is up to 120% of the average size of the MOF, which is up to 240nm. Suitably, the pore size of the porous substrate is smaller than average size of the flakes, such as of the metal-organic materials flakes, such as up to 100% or up to 90% or up to 80% of the average size of the MOF.

The substrate layer may have any suitable thickness. The thickness of the substrate layer may be between 5 to 1000µm, such as between 5 to 500µm, or between 10 to 250µm, or between 30 and 150µm, preferably between 30 and 100µm more preferably between 30 and 90µm, such as between 30 and 80µm, or between 30 and 70µm, such as between 30 and 60µm. Optionally, the substrate layer may have a thickness of between 5 and 30µm, such as between 8 and 25µm or between 8 and 20 µm, preferably between 10 and 15µm. Suitably the substrate is selected from a polysulphone substrate, a polyamide substrate and/or a ceramic substrate. The substrate may be selected from a polypropylene substrate, and/or polytetrafluoroethylene substrate and/or a ceramic substrate.

The substrate may have a surface roughness, suitably Rz, such as from 0 to 1µm, such as <500nm or <300nm, for example <200nm or <100nm, preferably <70nm or <50nm, more preferably <30nm. Advantageously, low surface roughness can provide improved uniformity of the structure in the active layer.

The surface of the substrate operable to receive the active layer may be hydrophilic. Suitably, contact angle of the coating composition on the substrate surface is <90°, such as <70° and preferably <50°.

The polymeric substrates may be treated prior to the addition of the coating composition. A surface of the substrate operable to receive the coating composition may have been subjected to hydrophilisation. Said substrate treatment may comprise the addition, suitably the grafting, of functional groups and/or the addition of hydrophilic additives. The added functional groups may be selected from one or more of hydroxyl, ketone, aldehyde, carboxylic acid and amine groups. The grafting of functional groups may be by plasma treatment, redox reaction, radiation, UV-ozone treatment, and/or chemical treatment. Hydrophilic additives may be selected from polyvinyl alcohol, polyethylene glycol, nanofillers, surface modifying macromolecules and zwitterions. The addition of hydrophilic additives may be carried out by coating or depositing additives with desired functionality on the membrane surface.

Advantageously, surface treatment of polymeric substrates can provide improved uniformity of the active layer on the membrane. The presence of said hydrophilicity and/or functionality on the polymeric substrate provides an active layer having a more uniform structure and improved continuity. The said hydrophilicity and/or functionality may also provide improved filter life span and stability.

Surface treatment can also improve properties including the antifouling performance of the membrane, enhanced salt rejection and/or enhanced molecule selectivity and/or enhanced permeability. Fouling is a phenomenon of declining in flux and the life-span of a membrane due to different types of fouling, such as organic fouling, biofouling, and colloidal fouling.

For ceramic and metallic substrates, the substrate is preferably not treated.

The active layer comprises one or more metal-organic frameworks (MOFs).

The metal-organic framework materials of any aspect of the present invention may be one-dimensional, two-dimensional or three-dimensional. Preferably, the MOF is porous. The MOF may comprise a network of secondary building units (SBUs), or metal ion core/metal subunit cluster core nodes, and organic linkers (or ligands) connecting the SBUS or nodes.

The MOF may be in continuous phase in the active layer, or may be in the form of flakes and/or particles. A MOF synthesised in the presence of substrate may be in the form of continuous phase. A MOF formed prior to contact with the substrate may be in the form of flakes and/or particles.

The SBUs or nodes, being sub units of the MOF, may comprise metal selected from one or more transition metal cations, such as one or more of Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Au, AuPd, Ni/Co, lanthanides, actinides, such as Lu, Tb(III), Dy(III), Ho(III), Er(III), Yb(III). Preferably Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Ni/Co, lanthanides, actinides, such as Lu, Tb(III), Dy(III), Ho(III), Er(III), Yb(III). More preferably Cr(III), Fe(II), Fe(III), Al(III), Co(II), Hf(IV), Ni, Mn, V, Sc, Y(III), Cu(II), Cu(I), Zn(II), Zr(IV), Cd, Pb, Ag (I), Ni/Co, lanthanides, actinides, such as Lu, Tb(III), Dy(III), Ho(III), Er(III), Yb(III), more preferably Cr(III), Fe(II), Fe(III), Al(III), Co(II), Hf(IV), Ni, Mn, V, Y(III), Cu(II), Cu(I), Zn(II), Zr(IV), Cd, Ag (I), Ni/Co, lanthanides, actinides, such as Lu, Tb(III), Dy(III), Ho(III), Er(III), Yb(III). The secondary building unit (SBU) may comprise: three, four, five, six, eight, nine, ten, eleven, twelve, fifteen or sixteen points of extension.

The SBU or node may be a transition-metal carboxylate cluster. The SBUs or nodes may be one or more selected from the group consisting of $Zn_4O(COO)_6$, $Cu_2(COO)_4$, $Cr_3O(H_2O)_3(COO)_6$, and $Zr_6O_4(OH)_{10}(H_2O)_6(COO)_6$, $Mg_2(OH_2)_2(COO)$, $RE_4(\mu3\text{-}O)_2(COO)_8$, $RE_4(\mu3\text{-}O)_2$, wherein RE is Y(III), Tb(III), Dy(III), Ho(III), Er(III), and/or Yb(III)). The structures of SBUs can be identified by X-Ray diffraction using methods well known to the skilled person.

Organic linkers suitable for use in the present invention include those operable to be used to form MOFs for water treatment, molecule separation, and biofiltration related applications. Such linkers may form strong bonds to metal cores, provide large pore sizes, provide high porosity, provide selective absorption and/or capacity.

The organic linkers of the MOF may be formed from a wide range of organic molecules, such as one or more carboxylate linkers; N-heterocyclic linkers; phosphonate linkers; sulphonate linkers, metallo linkers, such a carboxylate-metallo linkers; and mixtures and derivatives thereof.

The organic linkers may comprise one or more of ditopic, tritopic, tetratopic, hexatopic, octatopic linkers. The organic linkers may comprise desymmetrised linkers.

The organic linkers may comprise one or more ditopic carboxylate linkers, such as one or more of the group consisting of 4,4' -biphenyldicarboxylate (bpdc), 2,2'-dicyano-4,4' - biphenyldicarboxylate (CNBPDC), 9,10-anthracenedicarboxylate (adc), 4,4'-azobenzenedicarboxylate (abdc), 1,3-bis(3,5-dicarboxylphenylethynyl)benzene (bdpb), 2,2'-bipyridyl-5,5'-dicarboxylate (bpydc), 2,2'-dihydroxy-1,1' -binaphthalene-5,5' - dicarboxylate (5,5'-bda), 2-bromobenzene-1,4-dicarboxylate (brbdc ), 1,4-benzenedicarboxylates (BDC), BDC-Br, BDC-NH2, BDC-OC3H7, BDC-OC5H11, BDC-cycC2H4, BDC-ben, 2-bromo-1,4-benzenedicarboxylate (o-Br-bdc), BDC-F, BDC-Cl, BDC-Br, BDC-I, BDC-$F_4$, BDC-$Cl_4$, BDC-$Br_4$, BDC-$I_4$, BDC-(CH3)4, 2,5-dihydroxy-1,4-benzenedicarboxylate (DHBDC), thieno[3,2-b]thiophene-2,5-dicarboxylic acid (TTDC), thiophene-2,5-dicarboxylate (tdc), di-thieno-[3,2-b;2',3'-d]-thiophene-2,6-dicarboxylate (DTTDC), naphthalenedicarboxylate (NDC), 4,4'-benzophenone dicarboxylate (BPNDC), 4,4' -biphenyldicarboxylate (BPDC), 2,2' -dicyano-4,4' -biphenyldicarboxylate (CNBPDC), pyrene-2,7-dicarboxylate (PDC), p,p'-terphenyldicarboxylic acid (TPDC), amino-TPDC, pyridine 2,6-dicarboxylic acid HPDC, Thiol functionalised DMBD, azide-functionalized 2,3,5,6-tetramethylbenzene-1,4-dicarboxylate (TBDC), tetraanionic 2,5-dioxido-1,4-benzene-dicarboxylate (BOBDC/DHBDC/ DOT).

The organic linkers may comprise one or more tritopic carboxylate linkers, such as one or more of the group consisting of 1,3,5- benzenetricarboxylate (btc), biphenyl-3,4',5-tricarboxylate (bhtc), 4,4',4"-benzene-1,3,5-triyl-benzoate (btb), 4,4',4"-(triazine-2,4,6-triyl-tris(benzene-4,1-diyl))tribenzoate (tapb), 4,4',4"-benzene-1,3,5-triyl-benzoate, 4,4',4"(benzene-1,3,5-triyl-tris(ethyne-2,1-diyl))tribenzoate (bte), 4,4',4"-(benzene-1,3,5-triyl-tris(benzene-4,1- diyl))tribenzoate (bbc).

The organic linkers may comprise one or more tetratopic carboxylate linkers, such as one or more of the group consisting of 1,1'-azobenzene-3,3',5,5'-tetracarboxylate (abtc), azoxybenzene-3,3',5,5'-tetracarboxylate (aobtc), 4,4'-bipyridine-2,6,2',6'-tetracarboxylate (bpytc), such as (4',4",4"',4""-methanetetrayltetrabiphenyl4-carboxylate, mtbc), 4,4',4",4"'-Methanetetrayltetrabenzoic acid (MTB), benzene-substituted 4,4',4",4"'-Methanetetrayltetrabenzoic acid MTTB, 4,4',4"-tricarboxyltriphenylamine (TCA), 4,4',4",4"'- tetrakiscarboxyphenylsilane (TCPS), 2-thiophenecarboxylic acid (HTPCS), methanetetra(4- benzoate) (MTBA), 1,3,5,7-adamantane tetracarboxylate (act), N,N,N',N' - tetrakis(4-carboxyphenyl)-1,4-phenylenediamine (TCPPDA), 5,5' - (1,2-ethynediyl)bis(1,3-benzenedicarboxylate) (ebdc), 3,3',5,5'-biphenyltetracarboxylate (bptc), 3,3',5,5'-erphenyltetracarboxylate, 3,3',5,5'-quaterphenyltetracarboxylate, 3,3',5,5'-pentaphenyltetracarboxylate, 5,5'-(9,10-anthracenediyl)diisophthalate (adip), 3,3',5,5'-tetra-(phenyl-4-carboxylate), 9,9'-([1,1'-biphenyl]-4,4'-diyl)bis(9H-carbazole-3,6-dicarboxylate) (bbcdc).

The organic linkers may comprise one or more hexatopic carboxylate linkers, such as one or more of the group consisting of 5,5',5"-[1,3,5-benzenetriyltris(carbonylimino)]tris-1,3-benzenedicarboxylate, 5,5',5"-(((benzene-1,3,5-triyl-tris(ethyne-2,1-diyl))-tris(benzene-4,1-diyl))tris(ethyne-2,1-diyl))triisophthalate (ttei), 1,3,5-tris[((1,3-carboxylic acid-5-(4 (ethynyl)phenyl))ethynyl)phenyl]-benzene, 3,3',3",5,5',5"-benzene-1,3,5-triyl-hexabenzoate (bhb), 4,4',4"-tris(N,N-bis(4-carboxylphenyl)-amino)triphenylamine (H6tta), 1,3,5-tris[(1,3-di(4'-carboxylic acid-phenyl)-phenyl)-5-ethynyl]benzene] (H6L1), tris-(4-(5'-ethynyl-1,1':3,1 "-terphenyl-4,4"-dicarboxylic acid)-phenyl)-amine] (H6L2), 1,1':3,1"-terphenyl-4,4"-dicarboxylate.

The organic linkers may comprise one or more metallo linkers, such as one or more of the group consisting of [FeFe]-1,4-dicarboxylbenzene- 2,3-dithiolate (dcbdt), Cu(I)- 1,10-phenanthroline-based linker, 5,10,15,20-Tetrakis(4-carboxyphenyl)porphyrin metalloporphrin linker (tcpp), Au(I)-4,4',4",4"'-(1,2-phenylenebis(phosphanetriyl))-tetrabenzoate (pbptbc), 4,7-bis(4-carboxylphenyl)-1,3-dimethyl-benzimidazolium-tetrafluoroborate, [(R,R)-(2)-1,2-cyclohexanediamino-N,N'-bis(3-tert-butyl-5-(4-pyridyl)salicylic-dene)-Mn(III)Cl].

The organic linkers may comprise one or more octatopic carboxylate linkers, such as one or more of the group consisting of 5,5',5",5"'-silanetetrayltetraisophthalate (L6), 1,1'-binaphthyl-derived octacarboxylate linkers, 2,2'-diethoxy-1,1'binaphthyl-4,4',6,6'-tetracarboxylic acid (L12) and elongated L12 (L13, wherein a -C≡C- moiety is present in each arm of L12).

The organic linkers may comprise one or more N-heterocyclic linkers such as one or more of the group consisting of 2,5-bis-(2-hydroxyethoxy)-1,4-bis(4-pyridyl)benzene, 4,4'-dipyridylacetylene (dpa), pyrazine, imidazolate or derivative thereof, such as 1,4-bis(imidazolyl)-benzene and 1,5-bis(imidazol-1-ylmethyl)naphthalene, imidazole (Him), 2-methylimidazole, 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chloro-benzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine pyrazole (Hpz), 1,2,4-triazole (Htz), 1,2,3-triazole (Hta), and tetrazole (Httz), 5-chlorobenzimidazolate (cblm), 1,3,5-tris(1H-pyrazol-4-yl)benzene, 2,2'-bipyridine (BIPY), 2-phenylpyridine-5,4-dibenzoate (PPY-DC), 2,2 bipyridine-5,5-dibenzoate (BPY-DC).

The organic linkers may comprise one or more phosphonate linkers, such as one or more of the group consisting of phosphonate-oxalate, alkylphosphonic acids wherein alkyl is C1 to C10, such as methylphosphonic acid, (H2O3P(CH2)nPO3H2) (Cn)) wherein n is 1 to 10, methylenebisphosphonate, alkylbis(phosphonic acid); methylenebis(phosphonic acid), N,N'-piperazinebis(methylenephosphonic acid), para-sulfonylphenylphosphonic acid, N,N'-4,4'-bipiperidinebis(methylenephosphonic acid), N,N'-piperazinebis(methylenephosphonic acid), N,N'-2-methylpiperazinebis(methylenephosphonic acid), arylphosphonate, 4-carboxyphenylphosphonic acid (4-cppH3), 1,3,5-benzenetris(phosphonic acid), tris-1,3,5-(4-phosphonophenyl)- benzene (H6L), biphenylbisphosphonate, bipyridylphosphonates, methylphosphonates, or functionalised phosphate linkers, such as 2' -bipyridyl-5,5'-bis(phosphonic acid).

The organic linkers may comprise one or more sulphonates, such as one or more of the group consisting of 4-biphenylsulfonate, 2-naphthalenesulfonate, 1-naphthalenesulfonate, 1-pyrenesulfonate, 1,5- naphthalenedisulfonate, 2,6-naphthalenedisulfonate, 1-naphthalene sulfonate, p-toluenesulfonate and 1,3,6,8- pyrenetetrasulfonate; 1,3,5-tris(sulfonomethyl)benzene; $\alpha$, $\alpha'$, $\alpha'''$, $\alpha''''$-durenetetrasulfonate, 1,3,5,7-tetra(4-sulfonophenyl)adamantane, 1,3,5,7-tetra(4-sulfonophenyl)adamantane, 1,3,5,7-tetra(4-sulfonophenyl)adamantane; (4,4' - bis(sulfoethynyl)biphenyl; 4,4' -biphenyldisulfonate, p-sulfonatocalix[4]arene, p-sulfonatocalix[5]arene, p-sulfonatocalix[6]arene, p-sulfonatocalix[8]arene.

The organic linkers may comprise an elongated organic linker, such an elongated linker may have a weight average molecular weight (Mw) of up to 1500 Da, such as up to 1300 Da, up to 1300 Da, up to 1100 Da, up to 1000 Da, up to 900 Da, up to 850 Da, up to 800 Da, or up to 750 Da. The elongated linker may be a tritopiclinker, such as one or more selected from the group consisting of 4,4',4"-s-triazine-1,3,5-triyltri-p-aminobenzoate (tatab), 4,4',4"- (1,3,4,6,7,9,9-heptaazaphenalene-2,5,8-triyl)tribenzoate (htb), 4,4',4"-s-triazine-2,4,6-triyl-tribenzoate (tatb), 4,4',4"-(benzene-1,3,5-triyltris(benzene-4,1- diyl))tribenzoate (bbc), bipyridine (bpy); or an elongated BPY- or PPY-containing dicarboxylate linker, such as di-benzoate-substituted 2,2'-bipyridine (bpy-dc), di-benzoate-substituted 2-phenylpyridine (ppy-dc); or a ditopic carboxylate linker containing three phenylene groups and two acetylene groups; or 3,3'-(naphthalene-2,7-diyl)dibenzoate, 5,5'-(naphthalene-2,7-diyl)-diisophthalate, 3,3'-(naphthalene-2,7-diyl)-dibenzoate, 4,4'-azanediyldibenzoate, 4,4'-bipyridine (L4), 4,4'-azobis(pyridine) (L5).

The organic linkers may comprise a mixture of different organic linkers, for example a mixture of ditopic and ditopic linkers, such as 9,10-bis(triisopropylsilyloxy)phenanthrene-2,7- dicarboxylate (tpdc) and 3,3',5,5'-tetramethyl-4,4'-biphenyldicarboxylate (Me4bpdc); or a ditopic linker plus tritopic linker, such as carboxylate-pyridine linkers, for example, dipyridylfunctionalized chiral Ti(salan) and 4,4' -biphenyldicarboxylate (bpdc).

The linker may be selected from one or more selected from the group consisting of diacetylene-1,4-bis-(4-benzote), 2-methylpiperazine, piperazine (pip), 4,4',4-methanetriyltris(2,3,5,6-tetrachlorobenzoate) (ptmtc), *F-H2PDA, CDDB, 5-NH2-mBDC, dhtpa, pDBI, H3lmDC,* hexaflurosilicate, fumaric acid, muconic acid, olsalazine, 5,5',5"-(2-aminobenzene-1,3,5-triyl)tris(ethyne-2,1-diyl)triisophthalic acid (abtt), acetylacetonate (acac), 5,5'-(9,10-anthracenediyl)diisophthalate (adip), 3-aminopropyltrialkoxysilane (aps), 1,3-azulenedicarboxylate (azd), N,N'-bis(3,5-dicarboxyphenyl)pyromellitic diimide (bdcppi), 5,5'-(buta-1,3-diyne-1,4-diyl)diisophthalate (bddc/bdi), 1,4-benzenedi(4'-pyrazolyl) (bpd), 1,4-benzeneditetrazolate (bdt), 1,2-bis(4-pyridyl)ethane (bpe), 3,6-di(4-pyridyl)-1,2,4,5-tetrazine (bpta, dpt, or diPyTz), 4,4',4",4'''-benzene-1,2,4,5-tetrayltetrabenzoate (btatb, same as TCPB), bis(1H-1,2,3-triazolo[4,5-b],-[4',5'-i])dibenzo[1,4]-dioxin (btdd), 5,5',5"-benzene-1,3,5-triyltris(1-ethynyl-2-isophthalate) (btei), 1,3,5-benzenetristetrazolate (btt), 5,5',5"-(benzene-1,3,5-triyl-tris(biphenyl-4,4'-diyl))triisophthalate (btti), 1,12-dicarboxyl-1,12-dicabra-closo-dodecarborane (cdc), 4-($\alpha,\alpha,\alpha$-trifluoromethyl)pyridine (CF3Py), 4-carboxycinnamate (cnc), 1,4,8,11-tetraazacyclotetradecane (cyclam), 1,4-diazabicyclo[2.2.2]octane (dabco), 1,2-dihydrocyclobutabenzene-3,6-dicarboxylate (dbdc), 6,6'-dichloro-2,2'-dibenzyloxy-1,1'-binaphthyl-4,4'-dibenzoate (dcbBn), 3,5-dicyano-4-(4-carboxyphenyl)-2,20:6,4"-terpyridine (dccptp), 6,6'-dichloro-2,2'-diethoxy-1,10-binaphthyl-4,4'-dibenzoate (dcdEt), diethylformamide (def), diethylenetriamine (deta), 2,5-dihydroxyterephthalate (dhtp), N,N'-di-(4-pyridyl)-1,4,5,8-naphthalenetetracarboxydiimide (diPyNI), 1,4-diazabicyclo[2.2.2]octane (dabco), 2,5-dioxido-1,4-benzenedicarboxylate (dobdc) meso-1,2-bis(4-pyridyl)-1,2-ethanediol (dpg), 5,5'-(1,2-ethynediyl)bis(1,3-benzenedicarboxylate) (ebdc), ethylene diamine (ed), 4-ethylpyridine (EtPy), 4,4'-(idene hexafluoroisopropylidene)-dibenzoate (hfipbb), fumarate (fma), 5-fluoropyrimidin-2-olate (F-pymo), 2-fluoro-4-(1H-tetrazole-5-yl)benzoate (2F-4-tba), 4,5,9,10-tetrahydropyrene-2,7-dicarboxylate (hpdc), 1,3,4,6,7,8-hexahydro-2H-pyrimido[1,2-a]pyrimidine (hpp), 4,5-imidazoledicarboxylate (ImDC), isonicotinate (in), 5,5'-methylene diisophthalate (mdip), 1-meth-

ylimidazole (MeIM), 4-methylpyridine (MePy), mercaptonicotinate (mna), methanetetrabenzoate (mtb), 4,4',4"-nitrilotrisbenzoate (ntb), 4',4",4'''-nitrilotribiphenyl-3,5-dicarboxylate (ntbd), naphthalene-1,4,5,8-tetracarboxylate (ntc), 5,5',5"-(4,4',4"-nitrilotris(benzene-4,1-diyl)tris(ethyne-2,1-diyl))triisophthalate (ntei), oxidiacetate (oxdc), 4-(4-pyridyl) benzoate (pba), pyridine-3,5-bis(phenyl-4-carboxylate) (pbpc), p-phenylenediacylate (pda), pyridinedicarboxylate (pdc), 5-(pyridin-3-ylethynyl)isophthalate (peip), 4,6-pyrimidinedicarboxylate (PmDC), 5-[(pyridin-3-ylmethyl)amino]isophthalate (pmip), diphenylmethane-3,3',5,5'-tetrakis(3,5-bisbenzoate) (pmtb), piperazine (ppz), 5,5'-((5'-(4-((3,5-dicarboxyphenyl)ethynyl)phenyl)-[1,1':3',1"-terphenyl]-4,4"-diyl)-bis(ethyne-2,1-diyl))diisophthalate (ptei), pyrene-2,7-dicarboxylate (pydc), 5-methyl-4-oxo-1,4-dihydropyridine-3-carbaldehyde (pyen), 2-pyrimidinecarboxylate (pymc), pyrimidinolate (pymo), pyrene-2,7-dicarboxylate (pyrdc), quaterphenyl-3,3'''',5,5''''-tetracarboxylate (qptc), trans-stilbene-3,3',5,5'-tetracarboxylate (sbtc), 5-sulfoisophthalate (sip), 4,4',4"-s-triazine-2,4,6-triyltribenzoate (tatb), 4-(1H-tetrazole-5-yl)benzoate (4-tba), 5-tert-butyl-1,3-benzenedicarboxylate (tbbdc), 5-t-butyl isophthalate (tbip), 5,5',5"-(2,4,6-trimethylbenzene-1,3,5-triyl)tris(ethyne-2,1-diyl)triisophthalate (tbtt), tris(4-carboxybiphenyl)amine (tcbpa), tetrakis[4-(carboxyphenyl)-oxamethyl]methane (tern), 1,2,4,5-tetrakis(4-carboxyphenyl)-benzene (tcpb), N,N,N',N'-tetrakis(4-carboxyphenyl)biphenyl-4,4'-diamine (tcpbda), tetra-fluoroterephthalate (tftpa), 3,3',5,5'-tetra(4-carboxyphenyl)-2,2'-diethoxylbiphenyl (tcpdep), N,N,N',N'-tetrakis(4-carboxyphenyl)-1,4-phenylenediamine (tcppda), thieno[3,2-b]thiophene-2,5-dicarboxylate (T2DC), triethylenediamine (ted), tetrafluoroterephthalate (tfbdc), tetramethylterephthalate (tmbdc), 1,3,5-tri-p-(tetrazol-5-yl)phenylbenzene (TPB-3tz), 2,4,6-tri-p-(tetrazol-5-yl)phenyl-s-triazine (TPT-3tz), 2,4,6-tri(3-pyridyl)-1,3,5-triazine (3-tpt), 2,4,6-tri(4-pyridyl)-1,3,5-triazine (4-tpt), terphenyl-3,3",5,5"-tetracarboxylate (tptc), 5,10,15,20,-tetra-4-pyridyl-21H,23H-porphyrine (TPyP), 1,2,4-triazolate (trz), 5,5',5"-(((benzene-1,3,5-triyltris(ethyne-2,1-diyl))tris(benzene-4,1-diyl))tris-(ethyne-2,1-diyl))triisophthalate (ttei), tetrakis(4-tetrazolylphenyl)methane (ttpm), 3,5-bis(trifluoromethyl)-1,2,4-triazolate (Tz), tetrazolate-5-carboxylate (Tzc), TZI 5-tetrazolylisophthalate, ViPy 4-vinylpyridine, 2,3-Dimethyl-1,3-butadiene (DMBD).

The organic linkers may comprise one or more from the group consisting of 9,10-anthracenedicarboxylic acid, biphenyl-3,3',5,5'-tetracarboxylic acid, biphenyl-3,4',5-tricarboxylic acid, 5-bromoisophthalic acid, 5-cyano-1,3-benzenedicarboxylic acid, 2,2'-diamino-4,4'-stilbenedicarboxylic acid, 2,5-diaminoterephthalic acid, 2,2'-dinitro-4,4'-stilbenedicarboxylic acid, 5-ethynyl-1,3-benzenedicarboxylic acid, 2-hydroxyterephthalic acid, 3,3',5,5'-azobenzene tetracarboxylic acid, [1,1'-biphenyl]-4,4'-dicarboxylic acid, 2,5-dihydroxyterephthalic acid, 2,6-naphthalenedicarboxylic acid, 1,4-phenylenediacetic acid, 1,1,2,2-tetra(4-carboxylphenyl)ethylene, 1,3,5-tricarboxybenzene, 1,3,5-tris(4-carboxyphenyl)benzene, 1,4-di(4'-pyrazolyl)benzene, 1,4,7,10-teraazaacyclododecane-N,N',N",N'''-tetraacetic acid, 2,4,6-(tri-4-pyridinyl)-1,3,5-triazine, tris(isobutylaminoethyl)amine, 2-(diphenylphosphino)terephthalic acid.

MOFs suitable for use in the present invention include those operable to be used water treatment, molecule separation, biofiltration and related applications. Suitable MOFs preferably have water and chemical stability. The MOFs may have water insoluble linkers, and/or solvent-stable linkers, and/or strong covalent bonds between SBU and linkers, and/or multi-covalent bonds between SBU and linkers. Water and chemical stability may mean that the MOFs do not fully disassemble to linkers and SBUs in the presence of water and/or chemicals. Suitable MOFs may have covalent bond links between the linkers and the SBUs or nodes, and/or coordinate bonding between the linkers and the SBUs or nodes.

Suitable MOFs may have high surface area and/or large pore sizes. The MOF may have surface area of at least 10 $m^2$/g, such as 100 to 9,000 $m^2$/g, preferably 100 to 8,000 $m^2$/g or 500 to 8,000 $m^2$/g. The surface area can be measured using the known Brunauer, Emmett and Teller (BET) technique. The MOFs according to any aspect of the present invention, suitably in the form of porous flakes or particles, may have an average pore size of from 0.1nm to 1000nm, 0.1 to 950nm, 0.2 to 900nm, 0.2 to 850nm, preferably 0.2 to 800nm, 0.3 to 700nm, preferably 0.4 to 650, 0.4 to 550nm, 0.5 to 500 nm, 0.5 to 450nm, 0.2 nm to 100 nm, such as between 0.2 to 90 nm, 0.3 nm to 75nm, 0.4nm to 50nm, for example 0.4nm to 40nm, 0.4nm to 30nm, or 0.4nm to 20nm, suitably 0.4nm to 15nm, 0.4nm to 10nm.

The MOF may comprise a pillared-layer MOF. Suitably, in a pillared-layer MOF 2D sheets function as scaffolds for organic linkers, such as dipyridyl linkers. Advantageously, this can allow for diverse functionalities to be incorporated into the MOF, such as $-SO_3^{2-}$_groups. The use of $-SO_3^{2-}$_groups can induce a polarized environment and strong acid-base interaction with acidic guests like CO2. Furthermore, different pillar linker groups, such as -N=N- compared to -CH=CH-, provide different selectivity to $H_2O$ and methanol.

The MOF may comprise a functional group. The MOF may in particular be adapted for water treatment, molecule separation, and biofiltration related applications by the MOF comprising a functional group, suitably on one or more of the organic linkers. Said functional groups may provide selectivity and/or increase pore sizes for high adsorption capacity or high flux rate. The functional group may be selected from one or more of the group consisting of $-NH_2$, -Br, -Cl, -I, $-(CH_2)_n-CH_3$ wherein n is 1 to 10, such as $CH_3CH_2CH_2O$-, $CH_3CH_2CH_2CH_2O$-, ben-$C_4H_4$, methyl, -COOH, -OH,. For example, the MOF may be an IRMOF, such as IRMOF-1, IRMOF-2, IRMOF-3, IRMOF-4, IRMOF-5, IRMOF-6, IRMOF-7, IRMOF-8, IRMOF-9, IRMOF-10, IRMOF-16, IRMOF-11, IRMOF-12, IRMOF-13, IRMOF-14, IRMOF-15; and/or a CAU, such as CAU-10-OH, CAU-10-NH$_2$, CAU-10-H, CAU-10-CH$_3$; and/or MIL-125-NH2; and/or UiO-66(Zr)-(CH3)2.

The MOF may be selected from one or more of Zr-DUT-51, Hf-DUT-51, PCN-777, NU-1105, DUT-52, DUT-53, DUT-84, DUT-67, DUT-68, DUT-69, DUT-6, such as MIL-125 (Fe, Cr, Al, V), MIL-53 (Fe, Cr, Al, V), MIL-47(Fe, Cr, Al, V), UAM-150, UAM-151, UAM-152, Zr(O3PC12H8PO3), Zr Bipyridylphosphonates, Zr Methylphosphonates, Sn(IV) Bipyridylphosphonates, Sn(IV) Methylphosphonates, [Ag(4-biphenylsulfonate)]∞, [Ag(2-naphthalenesulfonate)] ∞, [Ag(H2O)0.5(1-naphthalenesulfonate)] ∞, [Ag(1-naphthalenesulfonate)] ∞ and [Ag(1-pyrenesulfonate)] ∞, UO$_2$(O$_3$PC$_6$H$_5$)$_3$0.7H$_2$O, (UO$_2$)$_3$(HOPC$_6$H$_6$)$_2$- (O$_3$PC$_6$H$_5$)$_2$3H$_2$O, SAT-16, SAT-12 (Mn$^{2+}$, Fe$^{2+}$, Co$^{2+}$, Ni$^{2+}$), MIL-91 (Al$^{3+}$, Fe$^{3+}$, In$^{3+}$, V$^{3+}$), STA-13 (Y$^{3+}$, Sc$^{3+}$, Yb$^{3+}$, Dy$^{3+}$), VSN-3 (with -CH$_2$- units ranging from 1 to 10) , VSB-4 (with -CH$_2$- units ranging from 1 to 10), ZIF-95, ZIF-100, Ms(btp)z (M = Ni,Cu, Zn, and Co; H3btp = 1,3,5-tris(1H-pyrazol-4-yl)benzene), IRMOF-76, IRMOF-77, PCM-18, MOF-1040, MOF-253_0.08PdCl$_2$, MOF-253_0.83PdCl$_2$, MOF-253_0.97Cu(BF$_4$)$_2$, NOTT-115, UMCM-150, UMCM-154, MOF-5, FJI-1, MOF-100, MOF-177, MOF-210, UMCM-1, UMCM-2, UMCM-3, UMCM-4, UMCM-8, UMCM-9, MTV-MOF-5, L6-L11; PCN-80, UNLPF-1, NOTT-140, UTSA-34a, UTSA-34b, MODF-1, SDU-1, NPG-5, UTSA-20, NU-100, NU-110E, PCN-61, PCN-66, PCN-69, PCN-610, DUT-49, PCN-88, NOTT-300, NOTT-202, NOTT-104, PCN-46, PCN-14, NOTT-100, NOTT-101, NOTT-103, NOTT-109, NOTT-111, ZSA-1, ZSA-2, NOTT-12, NOTT-16, POMF-Cu ([Cu$_{24}$L$_8$(H$_2$O)$_{24}$], MIL-59, PCN-12, PCN-12', DUT-75, DUT-76, PCN-16, PCN-16', PCN-511, IMP-11, PCN-512, IMP-9, MOF-11, MOF-36, Hf-PCN-523, PCN-521, MOF-177, MOF-180, MOF-200, SNU-150, MOF-14, MOF-143, MOF-388, MOF-399, UiO-88, MOF-1001, IRMOF-62, MOF-101, IRMOF-74, CAU-10-OH, CAU-10-NH$_2$, CAU-10-H, CAU-10-CH$_3$, CAU-10, CALF-25, Zn-DMOF, Co-DMOF, DUT-4, SAPO-34, SBA-15, HZSM-5, MCM-41, KIT-1, MCM-48, Zn-MOF-74, Ni-MOF-74, Mg-MOF-74, PCN-228, PCN-229, PCN-230, = MOF-808, MIL-160, MIL-163, FJI-H6, [Zr6O4(OH)4(btba)3](DMF)x(H2O)y wherein x is 0 to <20 and y is 0 to <20, FJI-H7, lanthanide element-based [La(pyzdc)1.5(H2O)2]2H2O, [Dy(Cmdcp)(H2O)3](NO3)2H2O)n, [Eu(HL)(H2O)2]n2H2O, Tb-DSOA, [Tb(L)(OH)]x(slov), ([Tb(L1)1.5(H2O)]3H2O, In-based JLU-Liu18, Al-based MIL-121, MAF-6, MAF-7, MAF-49, MAF-X8, [Zn12(trz)20][SiW12O40]11H2O, Zn2TCS(4'4-bipy), Zn-pbdc-11a(bpe)/-12a(bpe)/-12a(bpy), Zn(IM)1.5(abIM)0.5, ([Zn(C10H2O8)0.5(C10S2N2H8)]5H2O))n, Co/Zn-BTTBBPY, PCN-601, Mg-CUK-1, [Cd2(TBA)2(bipy)(DMA)2], Cu6(trz)10(H2O)4[H2SiW12O40}8H2O, [Ni(BPEB)], [Eu3(bpydb)3(HCOO)(u3-OH)2(DMF)](DMF)3(H2O)2, MAF-X25, MAF-X27, MAF-X25ox, MAF-27ox, PCN-101, NH2-MIL-125(Ti), Cu(I)-MOF, AEMOF-1, PCN-222, Cd-EDDA, [Cd2L2]NMPMEOH, Eu/UiO-66-(COOH)2, Eu/CPM-17-Zn, Eu/MIL-53-COOH(AI), [Ln(HL)(H2O)2]n2H2O, Eu3+@MIL-124, ([Tb(L1)1.5(H2O)]3H2O)n, [Tb(I)(OH)]x(solv), bio-MOF-1, BFMOF-1, NENU-500, Co-ZIF-9, Al2(OH)2TCPP-Co, AI-MIL-101-NH-Gly-Pro, UiO-66-CAT, Pt/UiO-66, HPW@MIL-101, POM-ionic-liquid-functionalized MIL-100, sulphated MIL-53, MIL-101(Cr)-NO2, NENU-1/12-tungstosilicic acid, Na-HPAA, PCMOF-10, Ca-PiPhtA, (NH4)2(adp)[Zn2(ox)3]3H2O, ([Zn(C10H2O8)0.5(C10S2N2H8)]5H2O])n, ([(Me2NH2]3(SO4))2[Zn2(ox)3])n, UiO-66-(SO3H)2, Tb-DSOA, [La3L4(H2O)6]ClxH2O, CALF-25, (Cu2I2)[Cu2PDC2-(H2O)2]2[Cu(MeCN)4]IDMF, (Cu4I4)[Cu2PDC2-(H2O)2]4DMF, (Cu2I2)[Cu3PDC3-(H2O)2]2MeCN)2DMF, ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, UiO-68., MOF-801, MOF-841, [Co4L3(u3-OH)(H2O)3](SO4)0.5, MOF-802, Cu-BTTri, PCN-426, MOF-545, Zn(1,3-BDP), [(CH3)2NH2]2[Eu6(u3-OH)8(1,4-NCD)6(H2O)6], NiDOBDC, AI(OH)(2,6-ndc) (ndc is naphthalendicarboxylate), MOF-525, MOF-535, Co-MOF-74, [Zn4(u4-O)-(u4-4-carboxy-3,5-dimethyl-4-carboxy-pyrazolato)3], PCP-33, NU-100, IRMOF-74-III-CH2NH2, Zn-pbdc-12a(bpe), mmen-Mg2(dobpdc), MAF-X25ox, FMOF-1, MAF-6, UiO-66-NH2@MON, ZIF-8, CAU-1, ZIF-67, MIL-68, MIL-101, UiO-67, UiO-66, [(C2H5)2NH2]2[Mn6(L)(OH)2(H2O)6]4DEF, [Zn(trz)(H2betc)0.5]DMF, PCN-100, NU-1000, FIR-53, FIR-54,AI-MIL-96, Fe-MIL-100, AI-MIL-100, Cr-MIL-100, Fe-MIL-53, Cr-MIL-53, UiO-66-NH2, InPCF-1, HKUST-1, ZIF-7, ZIF-9, CAU-6, H-ZIF-8-11, H-ZIF-8-12, H-ZIF-8-14, ZIF-8-MeOH, AI-MIL-53, Cr-MIL-101, Cu2L, PED-MIL-101, HM-MIL-101, MOF-235, UiO-67-OH, ZIF-25, ZIF-71, ZIF-93, ZIF-96, ZIF-97.

The MOF may be selected from one or more of Co-MOF-74, [Zn4(u4-O)-(u4-4-carboxy-3,5-dimethyl-4-carboxy-pyrazolato)3], PCP-33, NU-100, IRMOF-74-III-CH2NH2, Zn-pbdc-12a(bpe), mmen-Mg2(dobpdc), MAF-X25ox, FMOF-1, MAF-6, UiO-66-NH2@MON, ZIF-8, CAU-1, ZIF-67, MIL-68, MIL-101, UiO-67, UiO-66, [(C2H5)2NH2]2[Mn6(L)(OH)2(H2O)6]4DEF, [Zn(trz)(H2betc)0.5]DMF, PCN-100, NU-1000, FIR-53, FIR-54,AI-MIL-96, Fe-MIL-100, AI-MIL-100, Cr-MIL-100, Fe-MIL-53, Cr-MIL-53, UiO-66-NH2, InPCF-1, HKUST-1, ZIF-7, ZIF-9, CAU-6, H-ZIF-8-11, H-ZIF-8-12, H-ZIF-8-14, ZIF-8-MeOH, AI-MIL-53, Cr-MIL-101, Cu2L, PED-MIL-101, HM-MIL-101, MOF-235, UiO-67-OH, ZIF-25, ZIF-71, ZIF-93, ZIF-96, ZIF-97, for example one or more of ZIF-25, ZIF-71, ZIF-93, ZIF-96, ZIF-97, preferably for desalination membranes.

Suitably, the MOF is selected from one or more of Zr-DUT-51, Hf-DUT-51, PCN-777, NU-1105, DUT-52, DUT-53, DUT-84, DUT-67, DUT-68, DUT-69, DUT-6, such as MIL-125 (Fe, Cr, Al, V), MIL-53 (Fe, Cr, Al, V), MIL-47(Fe, Cr, Al, V), UAM-150, UAM-151, UAM-152, Zr(O3PC12H8PO3), Zr Bipyridylphosphonates, Zr Methylphosphonates, Sn(IV) Bipyridylphosphonates, Sn(IV) Methylphosphonates, [Ag(4-biphenylsulfonate)]∞, [Ag(2-naphthalenesulfonate)] ∞, [Ag(H2O)0.5(1-naphthalenesulfonate)] ∞, [Ag(1-naphthalenesulfonate)] ∞ and [Ag(1-pyrenesulfonate)] ∞, $UO_2(O_3PC_6H_5)_3$0.7$H_2O$, $(UO_2)_3(HOPC_6H_5)_2$- $(O_3PC_6H_5)_2$3$H_2O$, SAT-16, SAT-12 ($Mn^{2+}$, $Fe^{2+}$, $Co^{2+}$, $Ni^{2+}$), MIL-91 ($Al^{3+}$, $Fe^{3+}$, $In^{3+}$, $V^{3+}$), STA-13 ($Y^{3+}$, $Sc^{3+}$, $Yb^{3+}$, $Dy^{3+}$), VSN-3 (with -$CH_2$- units ranging from 1 to 10) , VSB-4 (with -$CH_2$- units ranging from 1 to 10), ZIF-95, ZIF-100, Ms(btp)z (M = Ni,Cu, Zn, and Co; H3btp = 1,3,5-tris(1H-pyrazol-4-yl)benzene), IRMOF-76, IRMOF-77, PCM-18, MOF-1040, MOF-253_0.08PdCl$_2$, MOF-253_0.83PdCl$_2$, MOF-253_0.97Cu(BF$_4$)$_2$, NOTT-115, UMCM-150, UMCM-154, MOF-5, FJI-1, MOF-100, MOF-177, MOF-210, UMCM-1, UMCM-2, UMCM-3, UMCM-4, UMCM-8, UMCM-9, MTV-MOF-5, L6-L11; PCN-80, UNLPF-1, NOTT-140, UTSA-34a, UTSA-34b, MODF-1, SDU-1, NPG-5, UTSA-20, NU-100, NU-110E, PCN-61, PCN-66, PCN-69, PCN-610, DUT-49, PCN-88, NOTT-300, NOTT-202, NOTT-104, PCN-46, PCN-14, NOTT-100, NOTT-101, NOTT-103, NOTT-109, NOTT-111, ZSA-1, ZSA-2, NOTT-12, NOTT-16, POMF-Cu ([Cu$_{24}$L$_8$(H$_2$O)$_{24}$], MIL-59, PCN-12, PCN-12', DUT-75, DUT-76, PCN-16, PCN-16', PCN-511, IMP-11, PCN-512, IMP-9, MOF-11, MOF-36, Hf-PCN-523, PCN-521, MOF-177, MOF-180, MOF-200, SNU-150, MOF-14, MOF-143, MOF-388, MOF-399, UiO-88, MOF-1001, IRMOF-62, MOF-101, IRMOF-74, CAU-10-OH, CAU-10-NH$_2$, CAU-10-H, CAU-10-CH$_3$, CAU-10, CALF-25, Zn-DMOF, Co-DMOF, DUT-4, SAPO-34, SBA-15, HZSM-5, MCM-41, KIT-1, MCM-48, Zn-MOF-74, Ni-MOF-74, Mg-MOF-74, PCN-228, PCN-229, PCN-230, MOF-808, MIL-160, MIL-163, FJI-H6, [Zr6O4(OH)4(btba)3](DMF)x(H2O)y, wherein x is 0 to <20 and y is 0 to <20, FJI-H7, lanthanide element-based [La(pyzdc)1.5(H2O)2]2H2O, [Dy(Cmdcp)(H2O)3](NO3)2H2O)n, [Eu(HL)(H2O)2]n2H2O, Tb-DSOA, [Tb(L)(OH)]x(slov), ([Tb(L1)1.5(H2O)]3H2O, In-based JLU-Liu18, Al-based MIL-121, MAF-6, MAF-7, MAF-49, MAF-X8, [Zn12(trz)20][SiW12O40]11H2O, Zn2TCS(4'4-bipy), Zn-pbdc-11a(bpe)/-12a(bpe)/-12a(bpy), Zn(IM)1.5(abIM)0.5, ([Zn(C10H2O8)0.5(C10S2N2H8)]5H2O))n, Co/Zn-BTTBBPY, PCN-601, Mg-CUK-1, [Cd2(TBA)2(bipy)(DMA)2], Cu6(trz)10(H2O)4[H2SiW12O40]8H2O, [Ni(BPEB)], [Eu3(bpydb)3(HCOO)(u3-OH)2(DMF)](DMF)3(H2O)2, MAF-X25, MAF-X27, MAF-X25ox, MAF-27ox, PCN-101, NH2-MIL-125(Ti), Cu(I)-MOF, AEMOF-1, PCN-222, Cd-EDDA, [Cd2L2]NMPMEOH, Eu/UiO-66-(COOH)2, Eu/CPM-17-Zn, Eu/MIL-53-COOH(AI), [Ln(HL)(H2O)2]n2H2O, Eu3+@MIL-124, ([Tb(L1)1.5(H2O)]3H2O)n, [Tb(I)(OH)]x(solv), bio-MOF-1, BFMOF-1, NENU-500, Co-ZIF-9, Al2(OH)2TCPP-Co, AI-MIL-101-NH-Gly-Pro, UiO-66-CAT, Pt/UiO-66, HPW@MIL-101, POM-ionic-liquid-functionalized MIL-100, sulphated MIL-53, MIL-101(Cr)-NO2, NENU-1/12-tungstosilicic acid, Na-HPAA, PCMOF-10, Ca-PiPhtA, (NH4)2(adp)[Zn2(ox)3]3H2O, ([Zn(C10H2O8)0.5(C10S2N2H8)]5H2O])n, ([(Me2NH2]3(SO4)]2[Zn2(ox)3])n, UiO-66-(SO3H)2, Tb-DSOA, [La3L4(H2O)6]ClxH2O, CALF-25, (Cu2I2)[Cu2PDC2-(H2O)2]2[Cu(MeCN)4]IDMF, (Cu4I4)[Cu2PDC2-(H2O)2]4DMF, (Cu2I2)[Cu3PDC3-(H2O)2]2MeCN)2DMF, ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, UiO-68., MOF-801, MOF-841, [Co4L3(u3-OH)(H2O)3](SO4)0.5, MOF-802, Cu-BTTri, PCN-426, MOF-545, Zn(1,3-BDP), [(CH3)2NH2]2[Eu6(u3-OH)8(1,4-NCD)6(H2O)6], NiDO-BDC, Al(OH)(2,6-ndc) (ndc is naphthalendicarboxylate), MOF-525, MOF-535.

The MOF may be selected from one or more of zeolitic imidazolate frameworks (ZIFs), suitably a ZIF formed from a metal salt of Zn, Co, Cd, Li, or B, with an imidazole based linker, such as ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, ZIF-8, ZIF-9, H-ZIF-8-11, H-ZIF-8-12, H-ZIF-8-14, ZIF-8-MeOH, ZIF-25, ZIF-71, ZIF-93, ZIF-96, ZIF-97 and their derivatives. The MOF may be selected from one or more of ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100.

Advantageously, ZIFs have been found to provide robust chemical and thermal resistance and controllable porosity and pore sizes.

The ZIFs may be formed of repeating units of (M-lm-M), wherein M is Zn or Co, and lm is imidazole or a derivative thereof which bridges the metal units in a tetrahedral coordination.

The imidazole or its derivative unit may be selected from one or more of imidazole (ZIF-4 linker), 2-methylimidazole (ZIF 8 linker), 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chloro-benzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine.

Advantageously, ZIFs can be used for high temperature filtration application and provide high thermal stability, high strength and/or chemical resistance. For example ZIF 8 can withstand temperatures of up to 550°C.

The MOF may be selected from one or more UiO MOFs, such as UiO-66, for example Eu/UiO-66-(COOH)2, UiO-66-CAT, Pt/UiO-66, UiO-66-(SO3H)2, UiO-67, UiO-68, UiO-88 and their derivatives. For example the UIO-66 MOF may be Eu/UiO-66-(COOH)2, UiO-66-CAT, Pt/UiO-66, UiO-66-(SO3H)2. The MOF may comprise UiO-68 or UiO-88.

Advantageously, UiO MOFs have been found to provide robust properties, such as high chemical and thermal stability, high mechanical strength, and/or large surface area. For instance, the thermal stability temperature is at least 200°C. UiO MOFs are Zr based. The UiO MOF may be zirconium 1,4-dicarboxybenzne MOF (UiO 66) which may be comprised of Zr6O4(OH)4, octahedral, 12-fold connected to adjacent octahedra through a 1,4-benzene-dicarboxylate (BDC) linker. The UiO MOF may alternatively/additionally be selected from one or more of UiO 66, zirconium aminobenzenedicarboxylate MOF (UiO-66-BDC-NH2), zirconium benzenedicarboylate (UiO-66-BDC), zirconium biphenyldicarboxylate MOF (UiO-66-BPD/UiO-67), zirconium fumarate MOF (UiO-66-FA, FA:Zr = 0.66-0.98), zirconium trans-1,2-ethylenedicarboxylic acid MOF (UiO-66-FA, FA:Zr=1), zirconium trimellitate MOF (UiO-66-BDC-COOH, BDC-COOH:Zr=0.9-1.0).

The MOF may be selected from one or more of MOF-74, such as Zn-MOF-74, Ni-MOF-74, Mg-MOF-74.

The MOF may be selected from one or more of Cu-BTTri, MIL-53 (Al), MIL-101(Cr), PCN-426-Cr(III), [(CH3)2NH2]2[Eu6(u3-OH)8(1,4-NCD)6(H2O)6], Zn(1,3-BDP), MOF-808, DUT-69, DUT-67, DUT-68, PCN-230, PCN-222, MOF-545, MOF-802, and HKUST-1. Suitably, the MOF is selected from one or more of MOF-808, PCN-230, PCN-222 and HKUST-1, preferably one or more of MOF-808, PCN-230, PCN-222.

The active layer may be operable to provide size exclusion filtration, fouling resistance, and/or adsorption, such as size exclusion and fouling resistance.

The pore size of the MOF may be tailored by using different species of MOFs or different organic linkers with different lengths. For example, the pore size of the MOF may be at least 0.6nm (e.g. ZIF-78), such as at least 0.8nm (e.g. ZIF-81), or at least 0.9nm (e.g. ZIF-79) or at least 1.2nm (e.g. ZIF-69), or at least 1.3nm (e.g. ZIF-68) or at least 1.6nm (e.g. ZIF-82), such as at least 1.8nm (e.g. ZIF-70), or at least 1.8nm (e.g. IRMOF-10), or at least 2.8nm (e.g. MOF-177).

The MOF may comprise MOF-74 adapted by replacing one or more of the original linkers containing one phenyl ring with a linker containing two, three, four, five, six, seven, nine, ten or eleven phenyl rings. Such an adaption can alter the pore size from ~1.4nm to ~2.0nm, to ~2.6nm, to ~3.3nm, to ~4.2nm, to ~4.8nm, to ~5.7nm, to ~7.2nm, to ~9.5 nm, respectively.

The MOF may be hydrophobic. The hydrophobic MOF may be selected from one or more of MIL-101(Cr), NiDOBDC, HKUST-1, Al(OH)(2,6-ndc) (ndc is naphthalendicarboxylate), MIL-100-Fe, UiO-66, ZIF family, such as ZIF 71, ZIF 74, ZIF-1, ZIF-4, ZIF-6, ZIF-11, ZIF-9, and ZIF 8. Advantageously, the use of such MOFs can improve the fouling resistance of the membrane.

The MOF may comprise an adsorption promoting MOF, for example UiO-66 or UiO-66-NH2, preferably UiO-66-NH2, which has been found to adsorb cationic dyes from aqueous solution more effectively than anionic dyes due to favourable electrostatic interactions between the adsorbents and cationic dyes. In particular, UiO-66-NH2 has been found to provide much higher adsorption capacity for cationic dyes and lower adsorption capacity for anionic dyes than UiO-66.

The active layer of any aspect of the present invention may have a thickness of from 2nm to 1000 nm, such as from 3 to 800nm or from 4 to 600nm, such as 5 to 400nm or 5 to 200nm, preferably 5 to 150nm or 5 to 100nm.

The MOFs according to any aspect of the present invention may comprise nanochannels, suitably the MOFs are in the form of flakes or particles comprising nanochannels. The average nanochannel diameter may be from 0.2 nm to 100 nm, such as between 0.2 to 90 nm, 0.3 nm to 75 nm, 0.4nm to 50nm, for example 0.5nm to 40nm, 0.5nm to 30nm, or 0.5nm to 20nm, suitably 0.5nm to 15nm, 0.5nm to 10nm or preferably 0.5nm to 8nm.

The MOF may be a zirconium based MOF, such as UiO - 66 (Zr), UiO - 67 (Zr), and UiO - 68 (Zr), MOF-525 (Zr6O4(OH)4(TCPP-H2)3, MOF-535 (Zr6O4(OH)4(XF)3, and MOF 545 (Zr6O8(H2O)8(TCPP-H2)2, where porphyrin H4-TCPP-H2 = (C48H24O8N4) and cruciform H4-XF=(C42O8H22), preferably UiO - 68 (Zr) or MOF-525, most preferably UiO-68. Said MOFs have been found to show exceptional stability against chemicals, temperature and mechanical stress. The structure of said MOFs may comprise Zr6O4(OH)4 cluster subunits as nodes and organic linkers such as benzene 1,4-dicarboxylate liner.

The MOF may comprise functional groups selected from one or more of amine, aldehyde, alkynes, and/or azide. MOFs pores may be modified for selective sieving and to provide higher efficiency by modification methods, suitably post-synthetic, on the linkers and/or the secondary building units/nodes, such as covalent post-synthetic modification method of amine, or aldehyde, or alkynes, or azides functional groups. Specific functional groups may be induced to MOF(s) for specific application. For example, adding -NH2 to UiO-66 to make UiO-66-NH2 has been found to improve ferric acid adsorption, and adding sulfone bearing groups to iso IRMOF-16 by, for example, oxidation using dimethyldioxirane, in order to create compatible interaction between the active layer and substrate.

The MOFs of the present invention may be synthesised according to the required property or purchased from commercial supplier. Suitable commercially available metal-organic framework materials can be purchased from BASF, Sigma-Aldrich, or Strem Chemicals.

The methods used to synthesise MOFs for the current invention are those conventional in the art and may be solvothermal synthesis, microwave-assisted synthesis, electrochemical synthesis etc.

The MOF may be synthesised from precursor material in the presence of a substrate.

A modulator may be used during synthesis of the MOF to control the MOF particle size, the modulator may be benzoic acid.

Suitably, the MOF is synthesised without the presence of a substrate.

The MOF may be in the form of a crystallised continuous phase or particles or flakes compacted and interacting or fused to each other forming the active layer. Preferably the MOF is in the form of particles or flakes.

The size distribution of the MOF flakes or particles may be such that at least 30wt% of the MOF flakes or particles have a size of between 1 nm to 10000 nm, such as between 2 to 7500nm, 5nm to 5000nm, 10nm to 4000nm, for example 15nm to 3500nm, 20nm to 3000nm, or 25nm to 3000nm, suitably 30nm to 2500 nm, 40nm to 2500nm or preferably 50 nm to 2500nm more preferably at least 40wt%, 50wt%, 60wt%, 70wt% and most preferably at least 80wt% or at least 90wt% or 95wt% or 98wt% or 99wt%. The size of the MOF and size distribution may be measured using transmission electron microscopy (TEM, JEM-2100F, JEOL Ltd. Japan).

For example, lateral sizes of two-dimensional layers across a sample of a MOF may be measured using transmission electron microscopy (TEM, JEM-2100F, JEOL Ltd. Japan), and the number (Ni) of the same sized nanosheets (Mi) measured. The average size may then be calculated by Equation 1:

$$\text{Average size} = \left. \sum_{i=1}^{\infty} N_i M_i \middle/ \sum_{i=1}^{\infty} N_i \right.$$

where $M_i$ is diameter of the nanosheets, and $N_i$ is the number of the size with diameter Mi.

The average size of the MOF particle or flake may be at least 60% of the average pore size of the substrate. For example, for average pore size of the substrate of 200 nm, the flake or particle may have an average size of at least 120 nm. Suitably, the average size of the MOF is equal to or larger than the average pore size of the porous substrate, such as at least 100%, or at least 120%, or at least 140% of the average pore size of the substrate.

The active layer may comprise materials, suitably two-dimensional materials, other than a MOF. For example, other materials of the active layer may be selected from one or more of transition metal dichalcogenide, silicene, germanene, stanene, boron-nitride, suitably h-boron nitride, carbon nitride, transition metal dichalcogenide, graphene, graphene oxide, reduced graphene oxide functionalised graphene oxide and polymer/graphene aerogel.

The active layer may comprise additives to tailor the properties of the active layer, such as other metals; and/or fibres, such as metal oxide nanostrands; and/or dopants such as Au, Fe, Cu, $Cu(OH)_2$, $Cd(OH)_2$ and/or $Zr(OH)_2$. Such additives may be added to the membrane to control the pore sizes and channel architecture of MOF and/or create nanochannels for high water flux rate. Any type of suitable fibres, such as continuous or stapled fibres, having diameter of 0.1 - 1000 nm may be incorporated within the membrane. Such as 0.1 to 850nm, 0.5 to 500nm, or 0.5 to 100nm, 0.75 to 75nm, preferably, 0.75 to 50nm. Suitably, the fibres are removed before use, such as by mechanical removal or by dissolution, etc.

Additives may be introduced to the coating composition containing the MOF and/or deposited on the membrane surface.

The membrane may comprise two or more discrete portions of active layers on the substrate.

The membrane of the present invention may be for any type of filtration. Suitably, the membrane of the present invention is for water treatment, such as oil/water separation; molecule separation, pharmaceutical filtration for removal of pharmaceutical residues in the aquatic environment; biofiltration, for example separation between micro-organisms and water; desalination or selective ion filtration; and nuclear waste water filtration for removal of nuclear radioactive elements from nuclear waste water; for blood treatment such as physiological filtration to replace damaged kidney filter and blood filtration; and/or separation of bio-platform molecules derived from sources such as plants, for example a grass. Suitably the membrane is for water treatment, such as desalination or oil and water separation, or for pharmaceutical filtration, or for dye removal.

The methods according to any aspect of the present invention may comprise contacting the coating composition onto the substrate using gravity deposition, vacuum deposition, pressure deposition; printing such as inkjet printing, aerosol printing, 3D printing, offset lithography printing, gravure printing, flexographic printing techniques, pad printing; curtain coating, dip coating, spin coating, and other printing or coating techniques known to those skilled in the art.

Suitably the coating composition is a liquid composition comprising a liquid medium and one or more of MOF(s). The coating compositions of the present invention may comprise solvent, nonsolvent or be solvent-less, and may be UV curable compositions, e-beam curable compositions etc.

The coating composition may comprise MOF precursors, such as one or more of a SBU or node precursor, suitably in the form of a salt, and organic ligand or precursor thereof. The coating composition may comprise, or be formed from a salt precursor of any type of compound that could be used to synthesise a MOF SBU or node, such a metal salt, for example one or more of an aluminium salt, ammonium salt, antimony salt, arsenic salt, barium salt, beryllium salt, bismuth salt, cadmium salt, calcium salt, cerium salt, cesium salt, chromium salt, cobalt salt, copper salt, dysprosium salt, erbium salt, europium salt, gadolinium salt, gallium salt, germanium salt, gold salt, hafnium salt, holmium salt, indium salt, iridium salt, iron salt, lanthanum salt, lead salt, lithium salt, lutetium salt, magnesium salt, manganese salt, mercury salt, molybdenum salt, neodymium salt, nickel salt, niobium salt, osmium salt, palladium salt, platinum salt, potassium sal, praseodymium salt, rhenium salt, rhodium salt, rubidium salt, ruthenium salt, samarium salt, scandium salt, selenium salt, silver salt, sodium salt, strontium salt, sulfur salt, tantalum salt, tellurium salt, terbium salt, thallium salt, thorium salt, thulium salt, tin salt, titanium salt, tungsten salt, vanadium salt, ytterbium salt, yttrium salt, zinc salt, zirconium salt.

The organic ligand precursor may include any type of organic ligand that could be used to synthesise a MOF, such as any one of the organic linkers listed above.

The precursor may be further dispersed or diluted to a mixture of ethanol and ethylene glycol and optionally filtered through filter with 500nm pore size.

When formulated as a liquid composition for use in the invention, e.g. as a solution, dispersion or suspension, a suitable carrier liquid or solvent may be aqueous or organic, and other components will be chosen accordingly. Optionally with other materials to enhance performance and/or rheology of the composition including any one or more of binders, drying additives, antioxidants, reducing agents, lubricating agents, plasticisers, waxes, chelating agents, surfactants, pigments, defoamers and sensitisers.

Preferably in the coating composition the MOF is dispersed or suspended in a carrier, suitably a carrier liquid.

The liquid carrier may be selected from one or more of water, ethanol, propanol, glycol, tertiary butanol, acetone, dimethyl sulfoxide, mixture of dimethyl sulfoxide/alcohol/glycol, water/alcohol/glycol, glycol/water/tertiary butanol, water/acetone mixtures, water/ethanol mixtures, N,N-dimethylformamide, N,N-diethylformamide, dimethylsulfoxide (DMSO), ethylene glycol (EG), N-methyl-2-pyrrolidone, isopropyl alcohol, mineral oil, dimethylformamide, terpineol, ethylene glycol, or mixtures thereof, preferably, water/ethanol, such as 50/50 vol% water/ethanol, water optionally with one or more stabiliser, such as lithium oxide; N-methyl-2-pyrrolidone (NMP), N,N-dimethylformamide, N,N-diethylformamide or terpineol, most preferably, water:ethanol, such as 50:50 vol% water/ethanol, N,N-dimethylformamide, N,N-diethylformamide.

Surfactants may be used with water or with other liquid as stabiliser and/or rheology modifier to stabilise the MOF dispersion and/or modify their viscosities, such as ionic surfactants, non-ionic surfactants and any other surfactants. Preferably, ionic surfactants are used as a stabiliser. The stabiliser may be selected from one or more of sodium cholate, sodium dodecyl sulphate, sodium dodecylbenzenesulphonate, lithium dodecyl sulphate, taurodeoxycholate, Triton X-100, TX-100, IGEPAL CO-890, etc. Preferably, Triton X - 100.

Centrifuge may be used to remove aggregated MOF. The spinning speed (rpm) may be within 100 to 10,000, such as 500 to 9000, 750 to 8,000, 800 to 6000, preferably 1,000 to 6,000.

Filtration may be applied to remove aggregated MOF in the dispersion.

The active layer may further comprise nanochannels formed by the use of fibres in the production of the membrane. Advantageously the presence of nanochannels within the active layers have been found to significantly increase the water flux by incorporating continuous or chopped fibres having diameter of 0.5 - 1000 nm during the manufacture process followed by removal of the fibres.

The nanochannels in the active layer may have a diameter of 1 to 750nm, such as 1 to 500nm, or 1 to 250nm, for example 1 to 150nm or 1 to 100nm, for example 1 to 50nm or 1 to 25nm, such as 1 to 10nm or preferably 1 to 5nm.

Suitably, the fibres used to form the nanochannels have a diameter of 1 to 750nm, such as 1 to 500nm, or 1 to 250nm, for example 1 to 150nm or 1 to 100nm, for example 1 to 50nm or 1 to 25nm, such as 1 to 10nm, preferably 1 to 5nm.

The length of the fibres may be in a range of from 1nm to 100 $\mu$m, such as 2nm to 75$\mu$m, or 3nm to 50 $\mu$m, for example 100nm to 15$\mu$m or 500nm to 10$\mu$m.

Preferably, the fibres are nanostrands, suitably metal oxide nanostrands. The metal oxide nanostrands may be selected from one or more of $Cu(OH)_2$, $Cd(OH)_2$ and $Zr(OH)_2$.

The coating composition may comprise fibres, such as the metal oxide nanostands.

The fibres may be present in the coating composition in a concentration of from 0.01 % to 150% of the MOF concentration, such as from 0.01 % to 100 %, 0.01 % to 50 %, 0.01 % to 20 %, preferably 0.01 % to 10%.

The fibres may be mixed with the coating composition by sonication or mechanical blending in dispersion. After the coating composition has been applied to the substrate, the fibres may be removed, for example by dissolving using an acid, preferably ethylenediaminetetraacetic acid, such as by immersing the membrane in an acidic solution, for example 0.15 M EDTA aqueous solution, suitably, for 20 min, optionally followed by washing with deionised water repeatedly. Advantageously, the use of fibres, such as metal oxide nanostrands, can significantly improve the water flux rate of the membrane whilst maintaining a similar salt/molecule rejection rate.

The coating composition of the present invention may comprise a binder. Suitable binders for use in the composition may be one or more selected from resins chosen from acrylics, acrylates, alkyds, styrenics, cellulose, cellulose derivatives, polysaccharides, polysaccharide derivatives, rubber resins, ketones, maleics, formaldehydes, phenolics, epoxides, fumarics, hydrocarbons, urethanes, polyvinyl butyral, polyamides, shellac, polyvinyl alcohol or any other binders known to those skilled in the art. It has been found that the addition of a binder can advantageously improve the mechanical strength of the membrane and extend the life span.

The coating composition of the present invention may be prepared by dispersing or dissolving one or more components in the liquid using any of mechanical mixing, e.g. leading edge-trailing blade stirring; ceramic ball grinding and milling; silverson mixing; glass bead mechanical milling, e.g. in an Eiger Torrance motormill; Ultra Turrax homogeniser; mortar and pestle grinding; mechanical roll milling.

Optionally, the membrane may be treated after application of the coating composition. Such post-treatment may comprise transferring the coated substrate into an oven at a temperature of 20°C to 200°C, preferably 20°C to 180°C such as 25°C to 17°C, 30°C to 160°C, more preferably 40°C to 150°C.

The coated substrate may be kept in oven at desired temperature for 2 to 1440 minutes, such as 2 to 1440 minutes, 3 to 1200minutes, 4 to 1000 minutes, 5 to 800 minutes, more preferably 5 to 800 minutes.

The coated substrate may be immersed in a solvent to crystallise the active, such as methanol.

Preferably, the method according to the present invention comprises deposition, such as pressure deposition, gravity deposition or vacuum deposition of the coating composition comprising one or more MOFs.

The concentration of the MOF or mixture thereof in a coating composition for deposition may be from 0.001 mg/ml to 10 mg/ml, such as from 0.01 mg/ml to 7mg/ml or from 0.1 mg/ml to 6mg/ml, or preferably from 0.1 to 5 mg/ml.

Preferably, the substrate for deposition is a porous polymeric substrate, such as a porous polymeric film or porous ceramic substrate, such as a ceramic film or plate.

The polymeric substrate for deposition may be selected from one or more of polyamide (PA), polysulphone (PSf), polyvinylidene fluoride (PVDF), polycarbonate (PC), cellulose acetate (CA), tricellulose acetate (TCA), and thin film composites (TFC), such as polysulphone supported polyamide composite substrate. Preferably, the polymeric substrate is selected from one or more of polyamide (PA), polysulphone (PSf), and thin film composite (TFC), such as polysulphone supported polyamide composite substrate.

Preferably, the ceramic substrate for deposition is selected from one or more of zeolite, titanium oxide, alumina, zirconia. Preferably, the ceramic substrate is selected from one of zeolite, titanium oxide, and zirconia, such as zeolite and zirconia.

The viscosity of the coating composition for deposition may be from 1 to 120 cPa, preferably 1 to 75 cPa, such as 5 to 45 cPa.

The surface tension of the coating composition for deposition may be from 1 to 200mN/m, such as from 20 to 100 mN/m.

The combination of preferred viscosity and surface tension provide high wettability and uniform deposition of the MOF onto substrate.

Advantageously, the coating compositions of the present invention for deposition can provide high stability for a prolonged period. A carrier of water/organic solvent mixture has been found to provide improved stability, such as water/acetone, water/glycol. In particular, a water dispersion with stabiliser has been found to provide significantly improved stability.

The deposition coating method may be gravity deposition, pressure deposition, and vacuum deposition, for example pressure deposition using pressure of at least 0.5 bar or 1 bar gauge pressure, preferably pressure deposition or vacuum deposition.

The deposition method may comprise the coating composition being passed through the substrate by gravity, applying pressure or vacuum suction, suitably to form layers of MOF membrane on top of the substrate.

The thickness of the active layer deposited on the substrate with deposition may be controlled by the concentration of the dispersion at a fixed volume, for example 100 ml of 0.001 mg/ml for the deposited area of 16cm$^2$ gives an average thickness of 5 nm.

The thickness of the active layer for MOF(s) deposition may be at least 3nm, such as at least 5nm or at least 10nm. The thickness of the active layer may be controlled by depositing the MOF-containing coating composition multiple times and/or with higher concentration. Such as depositing 10ml 0.5mg/ml MOF dispersion, a thickness of active layer is obtained. To reach twice the thickness, two applications of the 10ml 0.5mg/ml MOF dispersion can be deposited or 10ml of 1mg/ml can be deposited.

Preferably, the method according to the present invention comprises inkjet printing the coating composition comprising the MOF onto the substrate.

Preferably, the substrate for printing is a porous polymeric film, more preferably a polymeric porous film treated prior to the addition of the coating composition. Advantageously, a substrate in the form of a porous polymeric film can provide improved ease in processing and/or lower cost.

The substrate for printing may be selected from one or more of polyamide (PA), polysulphone (PSf), polycarbonate (PC), polyvinylidene fluoride (PVDF), cellulose acetate (CA), tricellulose acetate (TCA) and thin film composites (TFC), such as polysulphone supported polyamide composite film. Preferably, the substrate is selected from one or more of polyamide (PA), polysulphone (PSf), and thin film composite (TFC), such as polysulphone supported polyamide composite film.

The concentration of the MOF in the coating composition for printing may be from 0.05 mg/ml to 5 mg/ml, such as from 0.1 mg/ml to 3mg/ml or from 0.3 mg/ml to 2mg/ml, or preferably from 0.5 to 2 mg/ml. When the concentration is too low, such as lower than 0.03 mg/ml, leakage of the coating composition from the cartridge could occur, and when the concentration is too high, such as higher than 5mg/ml, the dispersion shows high viscosity which is not suitable for printing.

The coating composition for printing may further comprise fibres, such as nanostrands.

The diameter of nanostrands for printing may be from 1 to 100 nm, preferably from 1 to 50nm, more preferably from 1 to 10nm.

The length of the nanostrands for printing may range from 2nm to 10$\mu$m. Preferably, from 100nm to 10 $\mu$m, preferably from 200 nm to 10 $\mu$m. When the length is too long, it may cause the blockage to the nozzle, and when the length is too short, only caves may be generated. The coating composition may contain metal oxide nanostrands which could significantly increase the water flux rate whilst maintaining a similar salt/molecule rejection rate.

The viscosity of the coating composition for printing may be from 1 to 20cPa, preferably 5 to 15 cPa, such as 8 to 14 cPa.

The surface tension of the coating composition for printing may be from 1 to 150mN/m, such as from 25 to 80 mN/m.

The composition for printing may have a Z number of between 1 and 16. Said Z number is calculated according to the formula $Z = \sqrt{\gamma \rho \alpha / \mu}$ , in which $\mu$ is the viscosity of the coating composition(mPas), $\gamma$ is the surface tension of the coating composition (mJ/m2), $\rho$ is the density of the coating composition (g/cm-3), and $\alpha$ is the nozzle diameter of the inkjet printer head ($\mu$m).

Advantageously, the coating compositions of the present invention for printing can provide high stability for a prolonged period. Furthermore, a concentration of <1mg/ml has been found to give good droplet uniformity and stable jetting.

Suitably, the printing method is inkjet printing, such as drop on demand (DOD) inkjet printing, for example piezoelectric or thermal; or continuous inkjet printing (CIJ), preferably the inkjet printing is DOD inkjet printing.

The nozzle size of the inkjet printer may be from 1$\mu$m to 100$\mu$m, preferably from 5$\mu$m to 60$\mu$m.

The average size of the MOF for printing may be ≤1/10 of the nozzle size, such as ≤1/15 of the nozzle size. For example, for nozzle having diameter of 20 um, the flake may have a size of ≤2 um. Such a ratio of flake size to nozzle size can advantageously provide reduced nozzle blockage.

The cartridge drop volume may be from 1 pl to 100 pl, suitably from 5 to 50pl, or from 8 to 30pl, such as 10pl. The voltage and firing frequency of the inkjet printing method may depend on the waveform of the coating composition. The firing voltage may be from 10 to 30 V. The firing frequency may be from 3 kHz to 15kHz, suitably about 5kHz. The cartridge temperature of the inkjet printer may be from 20°C to 50°C, suitably about 40°C. The stage temperature of the inkjet printer may be from 20°C to 60°C, suitably about 21°C.

A raster with stochastic filters may be used during the printing processes. Advantageously, the use of said raster reduces overlapping of the MOF or mixture thereof and can provide improved homogeneous printing.

A sheet of clean room paper may be placed on the platen to reduce vacuum localisation.

The thickness of the active layer deposited by each pass of the inkjet printer may be at least 3nm, such as at least 4nm or at least 5 nm. The inkjet printing may apply the active layer with multiple passes.

Advantageously, the method of the present invention provides a time efficient method for producing active layers on a substrate that are of a controllable thickness, and allows for low thicknesses to be achieved. The method of the present invention advantageously produces improved uniformity in the active layer. The method of the present invention is scalable to allow for improved production of large numbers of membranes.

For application by other printing methods as detailed earlier, optimum parameters will be known to those skilled in the art. For example, for application by Flexography or gravure, the liquid composition should have a viscosity in the range of 15-35s Din #4 flow cup and a drying rate tailored to suit the substrate and print speed.

Preferably, the coating composition for use with the printing method according to the present invention comprises MOF precursors.

The filtration membranes according to the aspects of the present invention may be utilised in a wide range of architectures and filtration devices, including but not limited to those working under gravity filtration, vacuum filtration and/or pressurised systems.

The term lamellar structure herein means a structure having at least two overlapping layers. The term active layer herein means a layer operable to provide filtration across the layer. The term two-dimensional material herein means a material with at least one dimension of less than 100nm. Likewise, one-dimensional material herein means a material with at least two dimensions of less than 100nm.

For a better understanding of the invention, and to show how embodiments of the same may be carried into effect, reference will now be made, by way of example, to the following experimental data.

**EXAMPLES**

**Example 1:** 1 kg of MOF-525 particles was dispersed in dimethylformamide by adding surfactant and mechanically stirred at 1500rpm. The mixture was then filtered by a filter having 500nm pore size. The dispersion was then diluted to a concentration of 0.5 mg/ml for coating. The obtained coating composition was then applied to a polysulphone substrate which had been surface treated with UV-ozone for 20 min, using a Pixdro LP50 equipped with Xaar 1002 head assembly. Ethanol was then sprayed to rinse the residual solvent. Following drying under ambient conditions, the performance of the resultant membrane was assessed and found to exhibit improvement of multi-valent ions rejection rate to 90% in comparison to an uncoated membrane.

**Example 2:** 1 kg MOF-525 particles was dispersed in dimethylformamide by adding surfactant and mechanically stirred at 1500rpm. The mixture was then filtered by a filter having 500nm pore size. The dispersion was then diluted to a concentration of 0.5 mg/ml for coating. The obtained coating composition was then applied to a polysulphone substrate which was surface treated with UV-ozone for 20 min, using vacuum deposition method. Following drying under ambient conditions, the performance of the resultant membrane was then assessed and found to exhibit improvement of multi-valent ions rejection rate to 90% in comparison to an uncoated membrane.

**Example 3:** A HKUST-1 ink was prepared by dissolving 4l Cu(NO3)23H2O in DMSO with H3BTC, and mixed with 9l ethanol and 6l ethylene glycol. A porous polyamide substrate was treated with ozone for 20min. Inkjet printing with the ink was carried out using a commercial HP 2630 deskjet on the treated polyamide substrate. After inkjet printing, the sample was transferred to an oven with temperature of 80°C for 3min. Three printing and drying cycles were carried out to reach the desired thickness of MOF HKUST-1 coating. The performance of the resultant membrane was then assessed and found to exhibit improvement of multi-valent ions rejection rate to 85% in comparison to an uncoated membrane.

**Example 4:** A HKUST-1 coating composition was prepared by dissolving 4l Cu(NO3)23H2O in DMSO with H3BTC, and mixed with 9l ethanol and 6l ethylene glycol. A porous polyamide substrate was treated with ozone for 20min. Vacuum deposition with the coating composition was carried out on the treated polyamide substrate. After vacuum deposition, the sample was transferred to an oven with temperature of 80°C for 3min. The performance of the resultant membrane was then assessed and found to exhibit improvement of multi-valent ions rejection rate to 80% in comparison to an uncoated membrane.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

The invention may be additionally or alternatively defined or described by one or more of the following clauses:

> 1. A filtration membrane, the membrane comprising a porous substrate layer and an active layer arranged over at least a part of the substrate layer, wherein the active layer comprises a metal-organic framework (MOF).

> 2. A method of producing a filtration membrane, suitably a membrane according to clause 1, wherein the membrane comprises a porous substrate layer and an active layer arranged over at least a part of the substrate layer, wherein the active layer comprises a metal-organic framework (MOF), the method comprising the steps of:

>> a. optionally preparing the substrate

>> b. contacting the substrate with a coating composition comprising the MOF;

>> c. optionally, drying the membrane.

> 3. A filtration membrane wherein the membrane comprises a porous substrate layer and an active layer arranged over at least a part of the substrate layer, wherein the active layer comprises a metal-organic framework (MOF), wherein the filtration membrane is formed by the method of clause 2.

> 4. A coating composition for use in the manufacture of filtration membranes, suitably for use in the deposition, such as gravity, pressure, or vacuum deposition, or printing of filtration membranes, such as inkjet printing, the composition comprising at least one metal-organic framework material or precursor thereof.

> 5. A membrane or method according to any preceding clause, wherein the substrate is a polymeric substrate, a ceramic substrate, a composite substrate, such as a thin film composite substrate, an inorganic-organic substrate and/or a metal substrate., preferably a ceramic substrate or a polymeric substrate such as a polysulphone or polyamide substrate, or a zeolite or alumina substrate, most preferably a polymeric substrate.

6. A membrane or method according to clause 5, wherein the ceramic porous substrate is formed one or more of zeolite, silicon, silica, alumina, zirconia, mullite, bentonite and montmorillonite clay substrate.

7. A membrane or method according to clause 5, wherein the polymeric porous substrate is formed from one or more of polyacrylonitrile (PAN), polyethylene terephthalate (PET), polycarbonate (PC), polyamide (PA), polysulphone poly(ether) sulfone (PES), cellulose acetate (CA), poly(piperazine-amide), polyvinylidene fluoride (PVDF), polytetrafluoroethylene (PTFE), poly(phthalazinone ether sulfone ketone) (PPESK), polyamide-urea, poly (ether ether ketone), polypropylene, poly(phthalazinone ether ketone), and thin film composite porous films (TFC).

8. A membrane or method according to any preceding clause, wherein the porous substrate is a nanotechnology-based porous substrate, such as nanostructured ceramic porous substrate, inorganic-organic porous substrate and/or non-woven nanoporous fabric.

9. A membrane or method according to clause 8, wherein the nanostructured ceramic porous substrate is formed of two or more layers, suitably a first layer comprising a conventional pressure driven ceramic material, such as one or more of zeolite, titanium oxide, alumina, zirconia, etc., suitably with a second layer extending over at least a portion of the first layer, the second layer comprising synthesized zeolite, titanium oxide, alumina, such as via hydrothermal crystallisation or dry gel conversion methods.

10. A membrane or method according to any preceding clause, wherein the pore size of the substrate layer is from 0.1 nm to 4000 nm, such as ≤3000 nm, or ≤ 2000 nm, ≤1000nm or ≤500nm, such as ≤250nm, ≤100nm, ≤50nm or ≤1nm.

11. A membrane or method according to any preceding clause, wherein the substrate is selected from a polypropylene substrate, polytetrafluoroethylene substrate and/or a ceramic substrate.

12. A membrane or method according to any preceding clause, wherein the substrate comprises hydrophilic additives and/or functional groups, preferably the functional groups are selected from one or more of hydroxyl, ketone, aldehyde, carboxylic acid and amine groups, preferably the hydrophilic additives are selected from polyvinyl alcohol, polyethylene glycol, nanofillers, surface modifying macromolecules and zwitterions.

13. A membrane or method according to any preceding clause, wherein the substrate has been treated prior to the addition of the coating composition to provide the hydrophilic additives and/or functional groups, preferably a surface of the substrate operable to receive the coating composition has been subjected to hydrophilisation or the grafting of functional groups, preferably the grafting of functional groups is by plasma treatment, redox reaction, radiation, UV-ozone treatment, and/or chemical treatment and/or the addition of hydrophilic additives is carried out by coating or depositing additives with desired functionality on the membrane surface.

14. A membrane, method or composition according to any preceding clause, wherein the MOF comprises a network of secondary building units (SBUs), or metal ion core/metal subunit cluster core nodes, and organic linkers (or ligands) connecting the SBUS or nodes.

15. A membrane, method or composition according to clause 14, wherein the SBUs or nodes, being sub units of the MOF, comprise metal selected from one or more transition metal cations, such as one or more of Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Au, AuPd, Ni/Co, lanthanides, actinides, such as Lu, Tb(III), Dy(III), Ho(III), Er(III), Yb(III). Preferably Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Ni/Co, lanthanides, actinides, such as Lu, Tb(III), Dy(III), Ho(III), Er(III), Yb(III). More preferably Cr(III), Fe(II), Fe(III), Al(III), Co(II), Hf(IV), Ni, Mn, V, Sc, Y(III), Cu(II), Cu(I), Zn(II), Zr(IV), Cd, Pb, Ag (I), Ni/Co, lanthanides, actinides, such as Lu, Tb(III), Dy(III), Ho(III), Er(III), Yb(III), more preferably Cr(III), Fe(II), Fe(III), Al(III), Co(II), Hf(IV), Ni, Mn, V, Y(III), Cu(II), Cu(I), Zn(II), Zr(IV), Cd, Ag (I), Ni/Co, lanthanides, actinides, such as Lu, Tb(III), Dy(III), Ho(III), Er(III), Yb(III).

16. A membrane, method or composition according to clause 14 or 15, wherein the SBU or node is a transition-metal carboxylate cluster.

17. A membrane, method or composition according to any of clauses 14-16, wherein the SBUs or nodes are one or more selected from the group consisting of $Zn_4O(COO)_6$, $Cu_2(COO)_4$, $Cr_3O(H_2O)_3(COO)_6$, and $Zr_6O_4(OH)_{10}(H_2O)_6(COO)_6$, $Mg_2(OH_2)_2(COO)$, $RE_4(\mu_3\text{-}O)_2(COO)_8$, $RE_4(\mu_3\text{-}O)_2$, wherein RE is Y(III), Tb(III), Dy(III), Ho(III), Er(III), and/or Yb(III)).

18. A membrane, method or composition according to any of clauses 14-17, wherein the organic linkers of the MOF are one or more carboxylate linkers; N-heterocyclic linkers; phosphonate linkers; sulphonate linkers, metallo linkers, such a carboxylate-metallo linkers; and mixtures and derivatives thereof.

19. A membrane, method or composition according to any of clauses 14-18, wherein the organic linkers comprise one or more ditopic carboxylate linkers, such as one or more of the group consisting of 4,4'-biphenyldicarboxylate (bpdc), 2,2'-dicyano-4,4'-biphenyldicarboxylate (CNBPDC), 9,10-anthracenedicarboxylate (adc), 4,4'-azobenzenedicarboxylate (abdc), 1,3-bis(3,5-dicarboxylphenylethynyl)benzene (bdpb), 2,2'-bipyridyl-5,5'-dicarboxylate (bpydc), 2,2'-dihydroxy-1,1'-binaphthalene-5,5'-dicarboxylate (5,5'-bda), 2-bromobenzene-1,4-dicarboxylate (brbdc), 1,4-benzenedicarboxylates (BDC), BDC-Br, BDC-NH2, BDC-OC3H7, BDC-OC5H11, BDC-cycC2H4, BDC-ben, 2-bromo-1,4-benzenedicarboxylate (o-Br-bdc), BDC-F, BDC-Cl, BDC-Br, BDC-I, BDC-F$_4$, BDC-Cl$_4$, BDC-Br$_4$, BDC-I$_4$, BDC-(CH3)4, 2,5-dihydroxy-1,4-benzenedicarboxylate (DHBDC), thieno[3,2-b]thiophene-2,5-dicarboxylic acid (TTDC), thiophene-2,5-dicarboxylate (tdc), di-thieno-[3,2-b;2',3'-d]-thiophene-2,6-dicarboxylate (DTTDC), naphthalenedicarboxylate (NDC), 4,4'-benzophenone dicarboxylate (BPNDC), 4,4'-biphenyldicarboxylate (BPDC), 2,2'-dicyano-4,4'-biphenyldicarboxylate (CNBPDC), pyrene-2,7-dicarboxylate (PDC), p,p'-terphenyldicarboxylic acid (TPDC), amino-TPDC, pyridine 2,6-dicarboxylic acid HPDC, Thiol functionalised DMBD, azide-functionalized 2,3,5,6-tetramethylbenzene-1,4-dicarboxylate (TBDC), tetraanionic 2,5-dioxido-1,4-benzene-dicarboxylate (BOBDC/DHBDC/ DOT).

20. A membrane, method or composition according to any of clauses 14-19, wherein the organic linkers comprise one or more tritopic carboxylate linkers, such as one or more of the group consisting of 1,3,5-benzenetricarboxylate (btc), biphenyl-3,4',5-tricarboxylate (bhtc), 4,4',4"-benzene-1,3,5-triyl-benzoate (btb), 4,4',4"-(triazine-2,4,6-triyltris(benzene-4,1-diyl))tribenzoate (tapb), 4,4',4"-benzene-1,3,5-triyl-benzoate, 4,4',4"(benzene-1,3,5-triyl-tris(ethyne-2,1-diyl))tribenzoate (bte), 4,4',4"-(benzene-1,3,5-triyl-tris(benzene-4,1-diyl))tribenzoate (bbc).

21. A membrane, method or composition according to any of clauses 14-20, wherein the organic linkers comprise one or more tetratopic carboxylate linkers, such as one or more of the group consisting of 1,1'-azobenzene-3,3',5,5'-tetracarboxylate (abtc), azoxybenzene-3,3',5,5'-tetracarboxylate (aobtc), 4,4'-bipyridine-2,6,2',6'-tetracarboxylate (bpytc), such as (4',4",4''',4''''-methanetetrayltetrabiphenyl4-carboxylate, mtbc), 4,4',4",4'''-Methanetetrayltetrabenzoic acid (MTB), benzene-substituted 4,4',4",4'''-Methanetetrayltetrabenzoic acid MTTB, 4,4',4"-tricarboxyltriphenylamine (TCA), 4,4',4",4'''-tetrakiscarboxyphenylsilane (TCPS), 2-thiophenecarboxylic acid (HTPCS), methanetetra(4-benzoate) (MTBA), 1,3,5,7-adamantane tetracarboxylate (act), N,N,N',N'-tetrakis(4-carboxyphenyl)-1,4-phenylenediamine (TCPPDA), 5,5'-(1,2-ethynediyl)bis(1,3-benzenedicarboxylate) (ebdc), 3,3',5,5'-biphenyltetracarboxylate (bptc), 3,3',5,5'-erphenyltetracarboxylate, 3,3',5,5'-quaterphenyltetracarboxylate, 3,3',5,5'-pentaphenyltetracarboxylate, 5,5'-(9,10-anthracenediyl)diisophthalate (adip), 3,3',5,5'-tetra-(phenyl-4-carboxylate), 9,9'-([1,1'-biphenyl]-4,4'-diyl)bis(9H-carbazole-3,6-dicarboxylate) (bbcdc).

22. A membrane, method or composition according to any of clauses 14-21, wherein the organic linkers comprise one or more hexatopic carboxylate linkers, such as one or more of the group consisting of 5,5',5"-[1,3,5-benzenetriyltris(carbonylimino)]tris-1,3-benzenedicarboxylate, 5,5',5"-(((benzene-1,3,5-triyl-tris(ethyne-2,1-diyl))-tris(benzene-4,1-diyl))tris(ethyne-2,1-diyl))triisophthalate (ttei), 1,3,5-tris[((1,3-carboxylic acid-5-(4 (ethynyl)phenyl))ethynyl)phenyl]-benzene, 3,3',3",5,5',5"-benzene-1,3,5-triyl-hexabenzoate (bhb), 4,4',4"-tris(N,N-bis(4-carboxylphenyl)-amino)triphenylamine (H6tta), 1,3,5-tris[(1,3-di(4'-carboxylic acid-phenyl)-phenyl)-5-ethynyl]benzene] (H6L1), tris-(4-(5'-ethynyl-1,1':3',1"-terphenyl-4,4"-dicarboxylic acid)-phenyl)-amine] (H6L2), 1,1':3',1"-terphenyl-4,4"-dicarboxylate.

23. A membrane, method or composition according to any of clauses 14-22, wherein the organic linkers comprise one or more metallo linkers, such as one or more of the group consisting of [FeFe]-1,4-dicarboxylbenzene-2,3-dithiolate (dcbdt), Cu(I)-1,10-phenanthroline-based linker, 5,10,15,20-Tetrakis(4-carboxyphenyl)porphyrin metalloporphrin linker (tcpp), Au(I)-4,4',4",4'''-(1,2-phenylenebis(phosphanetriyl))-tetrabenzoate (pbptbc), 4,7-bis(4-carboxylphenyl)-1,3-dimethyl-benzimidazolium-tetrafluoroborate, [(R,R)-(2)-1,2-cyclohexanediamino-N,N'-bis(3-tert-butyl-5-(4-pyridyl)salicylicdene)-Mn(III)Cl].

24. A membrane, method or composition according to any of clauses 14-23, wherein the organic linkers comprise one or more octatopic carboxylate linkers, such as one or more of the group consisting of 5,5',5",5'''-silanetetrayltetraisophthalate (L6), 1,1'-binaphthyl-derived octacarboxylate linkers, 2,2'-diethoxy-1,1'binapthyl-4,4',6,6'-tetracarboxylic acid (L12) and elongated L12 (L13, wherein a -C=C- moiety is present in each arm of L12).

25. A membrane, method or composition according to any of clauses 14-24, wherein the organic linkers comprise one or more N-heterocyclic linkers such as one or more of the group consisting of 2,5-bis-(2-hydroxyethoxy)-1,4-bis-(4-pyridyl)benzene, 4,4'-dipyridylacetylene (dpa), pyrazine, imidazolate or derivative thereof, such as 1,4-bis(imidazolyl)-benzene and 1,5-bis(imidazol-1-ylmethyl)naphthalene, imidazole (Him), 2-methylimidazole, 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chloro-benzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine pyrazole (Hpz), 1,2,4-triazole (Htz), 1,2,3-triazole (Hta), and tetrazole (Httz), 5-chlorobenzimidazolate (cblm), 1,3,5-tris(1H-pyrazol-4-yl)benzene, 2,2'-bipyridine (BIPY), 2-phenylpyridine-5,4-dibenzoate (PPY-DC), 2,2 bipyridine-5,5-dibenzoate (BPY-DC).

26. A membrane, method or composition according to any of clauses 14-25, wherein the organic linkers comprise one or more phosphonate linkers, such as one or more of the group consisting of phosphonate-oxalate, alkylphosphonic acids wherein alkyl is C1 to C10, such as methylphosphonic acid, (H2O3P(CH2)nPO3H2) (Cn)) wherein n is 1 to 10, methylenebisphosphonate, alkylbis(phosphonic acid); methylenebis(phosphonic acid), N,N'-piperazinebis(methylenephosphonic acid), para-sulfonylphenylphosphonic acid, N,N'-4,4'-bipiperidinebis(methylenephosphonic acid), N,N'-piperazinebis(methylenephosphonic acid), N,N'-2- methylpiperazinebis(methylenephosphonic acid), arylphosphonate, 4-carboxyphenylphosphonic acid (4-cppH3), 1,3,5-benzenetris(phosphonic acid), tris-1,3,5-(4-phosphonophenyl)- benzene (H6L), biphenylbisphosphonate, bipyridylphosphonates, methylphosphonates, or functionalised phosphate linkers, such as 2' - bipyridyl-5,5'-bis(phosphonic acid).

27. A membrane, method or composition according to any of clauses 14-26, wherein the organic linkers comprise one or more sulphonates, such as one or more of the group consisting of 4-biphenylsulfonate, 2-naphthalenesulfonate, 1-naphthalenesulfonate, 1-pyrenesulfonate, 1,5-naphthalenedisulfonate, 2,6-naphthalenedisulfonate, 1-naphthalene sulfonate, p-toluenesulfonate and 1,3,6,8- pyrenetetrasulfonate; 1,3,5-tris(sulfonomethyl)benzene; α, α', α''', α''''-durenetetrasulfonate, 1,3,5,7-tetra(4-sulfonophenyl)adamantane, 1,3,5,7-tetra(4-sulfonophenyl)adamantane, 1,3,5,7-tetra(4-sulfonophenyl)adamantane; (4,4' -bis(sulfoethynyl)biphenyl; 4,4' -biphenyldisulfonate, p-sulfonatocalix[4]arene, p-sulfonatocalix[5]arene, p-sulfonatocalix[6]arene, p-sulfonatocalix[8]arene.

28. A membrane, method or composition according to any of clauses 14-27, wherein the organic linkers comprise one or more from the group consisting of 9,10-anthracenedicarboxylic acid, biphenyl-3,3',5,5'-tetracarboxylic acid, biphenyl-3,4',5-tricarboxylic acid, 5-bromoisophthalic acid, 5-cyano-1,3-benzenedicarboxylic acid, 2,2'-diamino-4,4'-stilbenedicarboxylic acid, 2,5-diaminoterephthalic acid, 2,2'-dinitro-4,4'-stilbenedicarboxylic acid, 5-ethynyl-1,3-benzenedicarboxylic acid, 2-hydroxyterephthalic acid, 3,3',5,5'-azobenzene tetracarboxylic acid, [1,1'-biphenyl]-4,4'-dicarboxylic acid, 2,5-dihydroxyterephthalic acid, 2,6-naphthalenedicarboxylic acid, 1,4-phenylenediacetic acid, 1,1,2,2-tetra(4-carboxylphenyl)ethylene, 1,3,5-tricarboxybenzene, 1,3,5-tris(4-carboxyphenyl)benzene, 1,4-di(4'-pyrazolyl)benzene, 1,4,7,10-teraazaacyclododecane-N,N',N'',N'''-tetraacetic acid, 2,4,6-(tri-4-pyridinyl)-1,3,5-triazine, tris(isobutylaminoethyl)amine, 2-(diphenylphosphino)terephthalic acid.

29. A membrane, method or composition according to any preceding clause, wherein the MOF has a surface area of at least 10 m$^2$/g, such as 100 to 9,000 m$^2$/g, preferably 100 to 8,000 m$^2$/g or 500 to 8,000 m$^2$/g.

30. A membrane, method or composition according to any preceding clause, wherein the MOF is in the form of porous flakes or particles.

31. A membrane, method or composition according to any preceding clause, wherein the MOF has an average pore size of from 0.1nm to 1000nm, 0.1 to 950nm, 0.2 to 900nm, 0.2 to 850nm, preferably 0.2 to 800nm, 0.3 to 700nm, preferably 0.4 to 650, 0.4 to 550nm, 0.5 to 500 nm, 0.5 to 450nm, 0.2 nm to 100 nm, such as between 0.2 to 90 nm, 0.3 nm to 75nm, 0.4nm to 50nm, for example 0.4nm to 40nm, 0.4nm to 30nm, or 0.4nm to 20nm, suitably 0.4nm to 15nm, 0.4nm to 10nm.

32. A membrane, method or composition according to any preceding clause, wherein the MOF comprises a functional group, preferably the functional group is selected from one or more of the group consisting of -NH$_2$, -Br, -Cl, -I, -(CH$_2$)$_n$-CH$_3$ wherein n is 1 to 10, such as CH$_3$CH$_2$CH$_2$O-, CH$_3$CH$_2$CH$_2$CH$_2$O-, ben-C$_4$H$_4$, methyl, -COOH, -OH, for example, the MOF may be an IRMOF, such as IRMOF-1, IRMOF-2, IRMOF-3, IRMOF-4, IRMOF-5, IRMOF-6, IRMOF-7, IRMOF-8, IRMOF-9, IRMOF-10, IRMOF-16, IRMOF-11, IRMOF-12, IRMOF-13, IRMOF-14, IRMOF-15; and/or a CAU, such as CAU-10-OH, CAU-10-NH$_2$, CAU-10-H, CAU-10-CHs; and/or MIL-125-NH2; and/or UiO-66(Zr)-(CH3)2.

33. A membrane, method or composition according to any preceding clause, wherein the MOF is selected from one or more of Zr-DUT-51, Hf-DUT-51, PCN-777, NU-1105, DUT-52, DUT-53, DUT-84, DUT-67, DUT-68, DUT-69, DUT-6, such as MIL-125 (Fe, Cr, Al, V), MIL-53 (Fe, Cr, Al, V), MIL-47(Fe, Cr, Al, V), UAM-150, UAM-151, UAM-152, Zr(O3PC12H8PO3), Zr Bipyridylphosphonates, Zr Methylphosphonates, Sn(IV) Bipyridylphosphonates, Sn(IV) Methylphosphonates, [Ag(4-biphenylsulfonate)]∞, [Ag(2-naphthalenesulfonate)] ∞, [Ag(H2O)0.5(1-naphthalenesulfonate)] ∞, [Ag(1-naphthalenesulfonate)] ∞ and [Ag(1-pyrenesul-fonate)] ∞, UO$_2$(O$_3$PC$_6$H$_5$)$_3$0.7H$_2$O, (UO$_2$)$_3$(HOPC$_6$H$_5$)$_2$- (O$_3$PC$_6$H$_5$)$_2$3H$_2$O, SAT-16, SAT-12 (Mn$^{2+}$, Fe$^{2+}$, Co$^{2+}$, Ni$^{2+}$), MIL-91 (Al$^{3+}$, Fe$^{3+}$, In$^{3+}$, V$^{3+}$), STA-13 (Y$^{3+}$, Sc$^{3+}$, Yb$^{3+}$, Dy$^{3+}$), VSN-3 (with -CH$_2$- units ranging from 1 to 10) , VSB-4 (with -CH$_2$-units ranging from 1 to 10), ZIF-95, ZIF-100, Ms(btp)z (M = Ni,Cu, Zn, and Co; H3btp = 1,3,5-tris(1H-pyrazol-4-yl)benzene), IRMOF-76, IRMOF-77, PCM-18, MOF-1040, MOF-253_0.08PdCl$_2$, MOF-253_0.83PdCl$_2$, MOF-253_0.97Cu(BF$_4$)$_2$, NOTT-115, UMCM-150, UMCM-154, MOF-5, FJI-1, MOF-100, MOF-177, MOF-210, UMCM-1, UMCM-2, UMCM-3, UMCM-4, UMCM-8, UMCM-9, MTV-MOF-5, L6-L11; PCN-80, UNLPF-1, NOTT-140, UTSA-34a, UTSA-34b, MODF-1, SDU-1, NPG-5, UTSA-20, NU-100, NU-110E, PCN-61, PCN-66, PCN-69, PCN-610, DUT-49, PCN-88, NOTT-300, NOTT-202, NOTT-104, PCN-46, PCN-14, NOTT-100, NOTT-101, NOTT-103, NOTT-109, NOTT-111, ZSA-1, ZSA-2, NOTT-12, NOTT-16, POMF-Cu ([Cu$_{24}$L$_8$(H$_2$O)$_{24}$], MIL-59, PCN-12, PCN-12', DUT-75, DUT-76, PCN-16, PCN-16', PCN-511, IMP-11, PCN-512, IMP-9, MOF-11, MOF-36, Hf-PCN-523, PCN-521, MOF-177, MOF-180, MOF-200, SNU-150, MOF-14, MOF-143, MOF-388, MOF-399, UiO-88, MOF-1001, IRMOF-62, MOF-101, IRMOF-74, CAU-10-OH, CAU-10-NH$_2$, CAU-10-H, CAU-10-CH$_3$, CAU-10, CALF-25, Zn-DMOF, Co-DMOF, DUT-4, SAPO-34, SBA-15, HZSM-5, MCM-41, KIT-1, MCM-48, Zn-MOF-74, Ni-MOF-74, Mg-MOF-74, PCN-228, PCN-229, PCN-230, MOF-808, MIL-160, MIL-163, FJI-H6, [Zr6O4(OH)4(btba)3](DMF)x(H2O)y, wherein x is 0 to <20 and y is 0 to <20, FJI-H7, lanthanide element-based [La(pyzdc)1.5(H2O)2]2H2O, [Dy(Cmdcp)(H2O)3](NO3)2H2O)n, [Eu(HL)(H2O)2]n2H2O, Tb-DSOA, [Tb(L)(OH)]x(slov), ([Tb(L1)1.5(H2O)]3H2O, In-based JLU-Liu18, Al-based MIL-121, MAF-6, MAF-7, MAF-49, MAF-X8, [Zn12(trz)20][SiW12O40]11H2O, Zn2TCS(4'4-bipy), Zn-pbdc-11a(bpe)/-12a(bpe)/-12a(bpy), Zn(IM)1.5(abIM)0.5, ([Zn(C10H2O8)0.5(C10S2N2H8)]5H2O))n, Co/Zn-BTTBBPY, PCN-601, Mg-CUK-1, [Cd2(TBA)2(bipy)(DMA)2], Cu6(trz)10(H2O)4[H2SiW12O40} 8H2O, [Ni(BPEB)], [Eu3(bpydb)3(HCOO)(u3-OH)2(DMF)](DMF)3(H2O)2, MAF-X25, MAF-X27, MAF-X25ox, MAF-27ox, PCN-101, NH2-MIL-125(Ti), Cu(I)-MOF, AEMOF-1, PCN-222, Cd-EDDA, [Cd2L2]NMPMEOH, Eu/UiO-66-(COOH)2, Eu/CPM-17-Zn, Eu/MIL-53-COOH(Al), [Ln(HL)(H2O)2]n2H2O, Eu3+@MIL-124, ([Tb(L1)1.5(H2O)]3H2O)n, [Tb(I)(OH)]x(solv), bio-MOF-1, BFMOF-1, NENU-500, Co-ZIF-9, Al2(OH)2TCPP-Co, Al-MIL-101-NH-Gly-Pro, UiO-66-CAT, Pt/UiO-66, HPW@MIL-101, POM-ionic-liquid-functionalized MIL-100, sulphated MIL-53, MIL-101(Cr)-NO2, NENU-1/12-tungstosilicic acid, Na-HPAA, PCMOF-10, Ca-PiPhtA, (NH4)2(adp)[Zn2(ox)3]3H2O, ([Zn(C10H2O8)0.5(C10S2N2H8)]5H2O])n, ([[Me2NH2]3(SO4))2[Zn2(ox)3])n, UiO-66-(SO3H)2, Tb-DSOA, [La3L4(H2O)6]ClxH2O, CALF-25, (Cu2I2)[Cu2PDC2-(H2O)2]2[Cu(MeCN)4]IDMF, (Cu4I4)[Cu2PDC2-(H2O)2]4DMF, (Cu2I2)[Cu3PDC3-(H2O)2]2MeCN)2DMF, ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, UiO-68., MOF-801, MOF-841, [Co4L3(u3-OH)(H2O)3](SO4)0.5, MOF-802, Cu-BTTri, PCN-426, MOF-545, Zn(1,3-BDP), [(CH3)2NH2]2[Eu6(u3-OH)8(1,4-NCD)6(H2O)6], NiDOBDC, Al(OH)(2,6-ndc) (ndc is naphthalendicarboxylate), MOF-525, MOF-535.

34. A membrane, method or composition according to any preceding clause, wherein the MOF is selected from one or more of zeolitic imidazolate frameworks (ZIFs), suitably a ZIF formed from a metal salt of Zn, Co, Cd, Li, or B, with an imidazole based linker, such as ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, ZIF-8, ZIF-9, H-ZIF-8-11, H-ZIF-8-12, H-ZIF-8-14, ZIF-8-MeOH, ZIF-25, ZIF-71, ZIF-93, ZIF-96, ZIF-97 and their derivatives, preferably the MOF is selected from one or more of ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100.

35. A membrane, method or composition according to clause 34, wherein the ZIF is formed of repeating units of (M-lm-M), wherein M is Zn or Co, and Im is imidazole or a derivative thereof which bridges the metal units, preferably in a tetrahedral coordination.

36. A membrane, method or composition according to clause 35, wherein the imidazole or its derivative unit is selected from one or more of imidazole (ZIF-4 linker), 2-methylimidazole (ZIF 8 linker), 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chlorobenzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine.

37. A membrane, method or composition according to any preceding clause, wherein the MOF is selected from one or more UiO MOFs, such as UiO-66, for example Eu/UiO-66-(COOH)2, UiO-66-CAT, Pt/UiO-66, UiO-66-(SO3H)2, UiO-67, UiO-68, UiO-88 and their derivatives, preferably the UIO-66 MOF is Eu/UiO-66-(COOH)2, UiO-66-CAT, Pt/UiO-66, UiO-66-(SO3H)2, more preferably the MOF comprises UiO-68 or UiO-88.

38. A membrane, method or composition according to clause 37, wherein the UiO MOF is zirconium 1,4-dicarboxybenzne MOF (UiO 66), preferably zirconium 1,4-dicarboxybenzne MOF comprised of Zr6O4(OH)4, octahedral, 12-fold connected to adjacent octahedra through a 1,4-benzene-dicarboxylate (BDC) linker, and/or one or more of zirconium aminobenzenedicarboxylate MOF (UiO-66-BDC-NH2), zirconium benzenedicarboylate (UiO-66-BDC), zirconium biphenyldicarboxylate MOF (UiO-66-BPD/UiO-67), zirconium fumarate MOF (UiO-66-FA, FA:Zr = 0.66-0.98), zirconium trans-1,2-ethylenedicarboxylic acid MOF (UiO-66-FA, FA:Zr=1), zirconium trimellitate MOF (UiO-66-BDC-COOH, BDC-COOH:Zr=0.9-1.0).

39. A membrane, method or composition according to any preceding clause, wherein the MOF is selected from one or more of MOF-74, such as Zn-MOF-74, Ni-MOF-74, Mg-MOF-74.

40. A membrane, method or composition according to any preceding clause, wherein the MOF is selected from one or more of Cu-BTTri, MIL-53 (Al), MIL-101(Cr), PCN-426-Cr(III), [(CH3)2NH2]2[Eu6(u3-OH)8(1,4-NCD)6(H2O)6], Zn(1,3-BDP), MOF-808, DUT-69, DUT-67, DUT-68, PCN-230, PCN-222, MOF-545, MOF-802, and HKUST-1, preferably the MOF is selected from one or more of MOF-808, PCN-230, PCN-222 and HKUST-1, more preferably one or more of MOF-808, PCN-230, PCN-222.

41. A membrane, method or composition according to any preceding clause, wherein the MOF is hydrophobic, preferably the hydrophobic MOF is selected from one or more of MIL-101(Cr), NiDOBDC, HKUST-1, Al(OH)(2,6-ndc) (ndc is naphthalendicarboxylate), MIL-100-Fe, UiO-66, ZIF family, such as ZIF 71, ZIF 74, ZIF-1, ZIF-4, ZIF-6, ZIF-11, ZIF-9, and ZIF 8.

42. A membrane, method or composition according to any preceding clause, wherein the MOF comprises an adsorption promoting MOF, for example UiO-66 or UiO-66-NH2, preferably UiO-66-NH2.

43. A membrane, method or composition according to any preceding clause, wherein the MOF is a zirconium based MOF, such as UiO - 66 (Zr), UiO - 67 (Zr), and UiO - 68 (Zr), MOF-525 (Zr6O4(OH)4(TCPP-H2)3, MOF-535 (Zr6O4(OH)4(XF)3, and MOF 545 (Zr6O8(H2O)8(TCPP-H2)2, where porphyrin H4-TCPP-H2 = (C48H24O8N4) and cruciform H4-XF=(C42O8H22), preferably UiO - 68 (Zr) or MOF-525, most preferably UiO-68.

44. A membrane, method or composition according to any preceding clause, wherein the MOF comprises functional groups selected from one or more of amine, aldehyde, alkynes, and/or azide.

45. A membrane, method or composition according to any preceding clause, wherein the MOF is UiO-66-NH2 and/or the MOF is sulfone group-containing iso IRMOF-16.

46. A membrane, method or composition according to any preceding clause, wherein the coating composition comprises MOF precursors, such as one or more of a SBU or node precursor, suitably in the form of a salt, and organic ligand or precursor thereof.

47. A membrane, method or composition according to any preceding clause, wherein the coating composition comprises, or is formed from a metal salt, such as one or more of an aluminium salt, ammonium salt, antimony salt, arsenic salt, barium salt, beryllium salt, bismuth salt, cadmium salt, calcium salt, cerium salt, cesium salt, chromium salt, cobalt salt, copper salt, dysprosium salt, erbium salt, europium salt, gadolinium salt, gallium salt, germanium salt, gold salt, hafnium salt, holmium salt, indium salt, iridium salt, iron salt, lanthanum salt, lead salt, lithium salt, lutetium salt, magnesium salt, manganese salt, mercury salt, molybdenum salt, neodymium salt, nickel salt, niobium salt, osmium salt, palladium salt, platinum salt, potassium sal, praseodymium salt, rhenium salt, rhodium salt, rubidium salt, ruthenium salt, samarium salt, scandium salt, selenium salt, silver salt, sodium salt, strontium salt, sulfur salt, tantalum salt, tellurium salt, terbium salt, thallium salt, thorium salt, thulium salt, tin salt, titanium salt, tungsten salt, vanadium salt, ytterbium salt, yttrium salt, zinc salt, zirconium salt.

48. A membrane, method or composition according to clause 46 or 47, wherein the organic ligand precursor is any one or more of the organic linkers according to any one or more of clause s18 to 28.

49. A membrane, method or composition according to any preceding clause, wherein the MOF is dispersed or suspended in a carrier, suitably a carrier liquid, in the coating composition.

50. A membrane, method or composition according to clause 49, wherein the liquid carrier is selected from one or more of water, ethanol, propanol, glycol, tertiary butanol, acetone, dimethyl sulfoxide, mixture of dimethyl sulfoxide/alcohol/glycol, water/alcohol/glycol, glycol/water/tertiary butanol, water/acetone mixtures, water/ethanol mixtures, N,N-dimethylformamide, N,N-diethylformamide, dimethylsulfoxide (DMSO), ethylene glycol (EG), N-methyl-2-pyrrolidone, isopropyl alcohol, mineral oil, dimethylformamide, terpineol, ethylene glycol, or mixtures thereof, preferably, water/ethanol, such as 50/50 vol% water/ethanol, water optionally with one or more stabiliser, such as lithium oxide; N-methyl-2-pyrrolidone (NMP), N,N-dimethylformamide, N,N-diethylformamide or terpineol, most preferably, water:ethanol, such as 50:50 vol% water/ethanol, N,N-dimethylformamide, N,N-diethylformamide.

51. A membrane or method according to any preceding clause, wherein the method comprises deposition, such as pressure deposition, gravity deposition or vacuum deposition of the coating composition comprising one or more MOFs.

52. A membrane, method or composition according to clause 51, wherein the concentration of the MOF or mixture thereof in the coating composition is from 0.001 mg/ml to 10 mg/ml, such as from 0.01 mg/ml to 7mg/ml or from 0.1 mg/ml to 6mg/ml, or preferably from 0.1 to 5 mg/ml.

53. A membrane, method or composition according to clause 51 or 52, wherein the substrate is a polymeric substrate selected from one or more of polyamide (PA), polysulphone (PSf), polyvinylidene fluoride (PVDF), polycarbonate (PC), cellulose acetate (CA), tricellulose acetate (TCA), and thin film composites (TFC), such as polysulphone supported polyamide composite substrate, preferably, the polymeric substrate is selected from one or more of polyamide (PA), polysulphone (PSf), and thin film composite (TFC), such as polysulphone supported polyamide composite substrate.

54. A membrane, method or composition according to clause 51 or 52 wherein substrate is a ceramic substrate selected from one or more of zeolite, titanium oxide, alumina, zirconia, preferably, the ceramic substrate is selected from one of zeolite, titanium oxide, and zirconia, such as zeolite and zirconia.

55. A membrane, method or composition according to any of clauses 51 to 54, wherein the viscosity of the coating composition is from 1 to 120 cPa, preferably 1 to 75 cPa, such as 5 to 45 cPa and/or the surface tension of the coating composition for deposition is from 1 to 200mN/m, such as from 20 to 100 mN/m.

56. A membrane or method according to any of clauses 1 to 50, wherein the method comprises printing, preferably inkjet printing, the coating composition comprising the MOF onto the substrate.

57. A membrane, method or composition according to clause 56, wherein the substrate is a porous polymeric film, more preferably a polymeric porous film treated prior to the addition of the coating composition.

58. A membrane, method or composition according to clause 56 or 57, wherein the substrate is selected from one or more of polyamide (PA), polysulphone (PSf), polycarbonate (PC), polyvinylidene fluoride (PVDF), cellulose acetate (CA), tricellulose acetate (TCA) and thin film composites (TFC), such as polysulphone supported polyamide composite film, preferably, the substrate is selected from one or more of polyamide (PA), polysulphone (PSf), and thin film composite (TFC), such as polysulphone supported polyamide composite film.

59. A membrane, method or composition according to any of clauses 56 to 58, wherein the concentration of the MOF in the coating composition is from 0.05 mg/ml to 5 mg/ml, such as from 0.1 mg/ml to 3mg/ml or from 0.3 mg/ml to 2mg/ml, or preferably from 0.5 to 2 mg/ml.

60. A membrane, method or composition according to any of clauses 56 to 59, wherein the viscosity of the coating composition for printing is from 1 to 20cPa, preferably 5 to 15 cPa, such as 8 to 14 cPa, and/or the surface tension of the coating composition for printing is from 1 to 150mN/m, such as from 25 to 80 mN/m.

61. A membrane, method or composition according to any preceding clause, wherein the membrane is for water treatment, such as water desalination, oil/water separation; molecule separation, protein separation, contaminates adsorption, pharmaceutical filtration for removal of pharmaceutical residues in the aquatic environment; biofiltration, for example separation between micro-organisms and water; desalination or selective ion filtration; and nuclear waste water filtration for removal of nuclear radioactive elements from nuclear waste water; for blood treatment such as physiological filtration to replace damaged kidney filter and blood filtration; and/or separation of bio-platform molecules derived from sources such as plants, for example a grass, preferably the membrane is for water treatment, such as desalination or oil and water separation, or for pharmaceutical filtration, or for dye removal, more the membrane is for water treatment.

62. Use of a membrane according to any of clauses 1 to 61 for water treatment, such as water desalination, oil/water separation; molecule separation, protein separation, contaminates adsorption, pharmaceutical filtration for removal of pharmaceutical residues in the aquatic environment; biofiltration, for example separation between micro-organisms and water; desalination or selective ion filtration; and nuclear waste water filtration for removal of nuclear radioactive elements from nuclear waste water; for blood treatment such as physiological filtration to replace damaged kidney filter and blood filtration; and/or separation of bio-platform molecules derived from sources such as plants, for example a grass, preferably the membrane is for water treatment, such as desalination or oil and water separation, or for pharmaceutical filtration, or for dye removal, more the membrane is for water treatment.

**Claims**

1. A filtration membrane, the membrane comprising a porous substrate layer and an active layer arranged over at least a part of the substrate layer, wherein the active layer comprises a metal-organic framework (MOF).

2. A method of producing a filtration membrane, suitably a membrane according to claim 1, wherein the membrane comprises a porous substrate layer and an active layer arranged over at least a part of the substrate layer, wherein the active layer comprises a metal-organic framework (MOF), the method comprising the steps of:

   a. optionally preparing the substrate
   b. contacting the substrate with a coating composition comprising the MOF;
   c. optionally, drying the membrane.

3. A filtration membrane wherein the membrane comprises a porous substrate layer and an active layer arranged over at least a part of the substrate layer, wherein the active layer comprises a metal-organic framework (MOF), wherein the filtration membrane is formed by the method of claim 2.

4. A coating composition for use in the manufacture of filtration membranes, suitably for use in the deposition, such as gravity, pressure, or vacuum deposition, or printing of filtration membranes, such as inkjet printing, the composition comprising at least one metal-organic framework material or precursor thereof.

5. A membrane or method according to any preceding claim, wherein the substrate is a polymeric substrate, a ceramic substrate, a composite substrate, such as a thin film composite substrate, an inorganic-organic substrate and/or a metal substrate., preferably a ceramic substrate or a polymeric substrate such as a polysulphone or polyamide substrate, or a zeolite or alumina substrate, most preferably a polymeric substrate;

   typically, wherein the ceramic porous substrate is formed one or more of zeolite, silicon, silica, alumina, zirconia, mullite, bentonite and montmorillonite clay substrate,
   or wherein the polymeric porous substrate is formed from one or more of polyacrylonitrile (PAN), polyethylene terephthalate (PET), polycarbonate (PC), polyamide (PA), polysulphone poly(ether) sulfone (PES), cellulose acetate (CA), poly(piperazine-amide), polyvinylidene fluoride (PVDF), polytetrafluoroethylene (PTFE), poly(phthalazinone ether sulfone ketone) (PPESK), polyamide-urea, poly (ether ether ketone), polypropylene, poly(phthalazinone ether ketone), and thin film composite porous films (TFC).

6. A membrane or method according to any preceding claim, wherein the porous substrate is a nanotechnology-based porous substrate, such as nanostructured ceramic porous substrate, inorganic-organic porous substrate and/or non-woven nano-porous fabric.

   typically, wherein the nanostructured ceramic porous substrate is formed of two or more layers, suitably a first layer comprising a conventional pressure driven ceramic material, such as one or more of zeolite, titanium oxide, alumina, zirconia, etc., suitably with a second layer extending over at least a portion of the first layer, the second layer comprising synthesized zeolite, titanium oxide, alumina, such as via hydrothermal crystallisation or dry gel conversion methods.

and/or wherein the pore size of the substrate layer is from 0.1 nm to 4000 nm, such as ≤3000 nm, or ≤ 2000 nm, ≤1 000nm or ≤500nm, such as ≤250nm, ≤1 00nm, ≤50nm or ≤1 nm.

and/or wherein the substrate is selected from a polypropylene substrate, polytetrafluoroethylene substrate and/or a ceramic substrate.

and/or wherein the substrate comprises hydrophilic additives and/or functional groups, preferably the functional groups are selected from one or more of hydroxyl, ketone, aldehyde, carboxylic acid and amine groups, preferably the hydrophilic additives are selected from polyvinyl alcohol, polyethylene glycol, nanofillers, surface modifying macromolecules and zwitterions.

and/or wherein the substrate has been treated prior to the addition of the coating composition to provide the hydrophilic additives and/or functional groups, preferably a surface of the substrate operable to receive the coating composition has been subjected to hydrophilisation or the grafting of functional groups, preferably the grafting of functional groups is by plasma treatment, redox reaction, radiation, UV-ozone treatment, and/or chemical treatment and/or the addition of hydrophilic additives is carried out by coating or depositing additives with desired functionality on the membrane surface.

7.  A membrane, method or composition according to any preceding claim, wherein the MOF comprises a network of secondary building units (SBUs), or metal ion core/metal subunit cluster core nodes, and organic linkers (or ligands) connecting the SBUS or nodes.

typically, wherein the SBUs or nodes, being sub units of the MOF, comprise metal selected from one or more transition metal cations, such as one or more of Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Au, AuPd, Ni/Co, lanthanides, actinides, such as Lu, Tb(III), Dy(III), Ho(III), Er(III), Yb(III). Preferably Cr(III), Fe(II), Fe(III), Al(III), Co(II), Ru(III), Os(III), Hf(IV), Ni, Mn, V, Sc, Y(III), Cu(II), Cu(I), Zn(II), Zr(IV), Cd, Pb, Ba, Ag (I), Ni/Co, lanthanides, actinides, such as Lu, Tb(III), Dy(III), Ho(III), Er(III), Yb(III). More preferably Cr(III), Fe(II), Fe(III), Al(III), Co(II), Hf(IV), Ni, Mn, V, Sc, Y(III), Cu(II), Cu(I), Zn(II), Zr(IV), Cd, Pb, Ag (I), Ni/Co, lanthanides, actinides, such as Lu, Tb(III), Dy(III), Ho(III), Er(III), Yb(III), more preferably Cr(III), Fe(II), Fe(III), Al(III), Co(II), Hf(IV), Ni, Mn, V, Y(III), Cu(II), Cu(I), Zn(II), Zr(IV), Cd, Ag (I), Ni/Co, lanthanides, actinides, such as Lu, Tb(III), Dy(III), Ho(III), Er(III), Yb(III).

and/or wherein the SBU or node is a transition-metal carboxylate cluster.

and/or wherein the SBUs or nodes are one or more selected from the group consisting of $Zn_4O(COO)_6$, $Cu_2(COO)_4$, $Cr_3O(H_2O)_3(COO)_6$, and $Zr_6O_4(OH)_{10}(H_2O)_6(COO)_6$, $Mg_2(OH_2)_2(COO)$, $RE_4(\mu_3-O)_2(COO)_8$, $RE_4(\mu_3-O)_2$, wherein RE is Y(III), Tb(III), Dy(III), Ho(III), Er(lll), and/or Yb(III)).

and/or wherein the organic linkers of the MOF are one or more carboxylate linkers; N-heterocyclic linkers; phosphonate linkers; sulphonate linkers, metallo linkers, such a carboxylate-metallo linkers; and mixtures and derivatives thereof.

and/or wherein the organic linkers comprise one or more ditopic carboxylate linkers, such as one or more of the group consisting of 4,4' -biphenyldicarboxylate (bpdc), 2,2'-dicyano-4,4' - biphenyldicarboxylate (CNBPDC), 9,10-anthracenedicarboxylate (adc), 4,4'-azobenzenedicarboxylate (abdc), 1,3-bis(3,5-dicarboxylphenylethynyl)benzene (bdpb), 2,2'-bipyridyl-5,5'-dicarboxylate (bpydc), 2,2'-dihydroxy-1,1' -binaphthalene-5,5' - dicarboxylate (5,5'-bda), 2-bromobenzene-1,4-dicarboxylate (brbdc ), 1,4-benzenedicarboxylates (BDC), BDC-Br, BDC-NH2, BDC-OC3H7, BDC-OC5H11, BDC-cycC2H4, BDC-ben, 2-bromo-1,4-benzenedicarboxylate (o-Br-bdc), BDC-F, BDC-Cl, BDC-Br, BDC-I, $BDC-F_4$, $BDC-Cl_4$, $BDC-Br_4$, $BDC-I_4$, BDC-(CH3)4, 2,5-dihydroxy-1,4-benzenedicarboxylate (DHBDC), thieno[3,2-b]thiophene-2,5-dicarboxylic acid (TTDC), thiophene-2,5-dicarboxylate (tdc), di-thieno-[3,2-b;2',3'-d]-thiophene-2,6-dicarboxylate (DTTDC), naphthalenedicarboxylate (NDC), 4,4'-benzophenone dicarboxylate (BPNDC), 4,4' -biphenyldicarboxylate (BPDC), 2,2' -dicyano-4,4' -biphenyldicarboxylate (CNBPDC), pyrene-2,7-dicarboxylate (PDC), p,p'-terphenyldicarboxylic acid (TPDC), amino-TPDC, pyridine 2,6-dicarboxylic acid HPDC, Thiol functionalised DMBD, azide-functionalized 2,3,5,6-tetramethylbenzene-1,4-dicarboxylate (TBDC), tetraanionic 2,5-dioxido-1,4-benzene-dicarboxylate (BOBDC/DHBDC/DOT).

and/or wherein the organic linkers comprise one or more tritopic carboxylate linkers, such as one or more of the group consisting of 1,3,5- benzenetricarboxylate (btc), biphenyl-3,4',5-tricarboxylate (bhtc), 4,4',4"-benzene-1,3,5-triyl-benzoate (btb), 4,4',4"-(triazine-2,4,6-triyltris(benzene-4,1-diyl))tribenzoate (tapb), 4,4',4"-benzene-1,3,5-triyl-benzoate, 4,4',4"(benzene-1,3,5-triyltris(ethyne-2,1-diyl))tribenzoate (bte), 4,4',4"-(benzene-1,3,5-triyl-tris(benzene-4,1-diyl))tribenzoate (bbc).

and/or wherein the organic linkers comprise one or more tetratopic carboxylate linkers, such as one or more of the group consisting of 1,1'-azobenzene-3,3',5,5'-tetracarboxylate (abtc), azoxybenzene-3,3',5,5'-tetracarboxylate (aobtc), 4,4'-bipyridine-2,6,2',6'-tetracarboxylate (bpytc), such as (4',4",4''',4''''-methanetetrayltetrabiphenyl4-carboxylate, mtbc), 4,4',4",4'''-Methanetetrayltetrabenzoic acid (MTB), benzene-substituted 4,4',4",4'''-Methanetetrayltetrabenzoic acid MTTB, 4,4',4"-tricarboxyltriphenylamine (TCA), 4,4',4",4'''- tetrakiscarboxyphenylsilane (TCPS), 2-thiophenecarboxylic acid (HTPCS), methanetetra(4- benzoate) (MTBA), 1,3,5,7-adamantane tetracarboxylate (act), N,N,N',N' - tetrakis(4-carboxyphenyl)-1,4-phenylenediamine (TCPPDA), 5,5' - (1,2-ethynediyl)bis(1,3-benzenedicarboxylate) (ebdc), 3,3',5,5'-biphenyltetracarboxylate (bptc), 3,3',5,5'-erphenyltetracarboxylate, 3,3',5,5'-quaterphenyltetracarboxylate, 3,3',5,5'-pentaphenyltetracarboxylate, 5,5'-(9,10-anthracenediyl)diisophthalate (adip), 3,3',5,5'-tetra-(phenyl-4-carboxylate), 9,9'-([1,1'-biphenyl]-4,4'-diyl)bis(9H-carbazole-3,6-dicarboxylate) (bbcdc).

and/or wherein the organic linkers comprise one or more hexatopic carboxylate linkers, such as one or more of the group consisting of 5,5',5"-[1,3,5-benzenetriyltris(carbonylimino)]tris-1,3-benzenedicarboxylate, 5,5',5"-(((benzene-1,3,5-triyl-tris(ethyne-2,1-diyl))-tris(benzene-4,1-diyl))tris(ethyne-2,1-diyl))triisophthalate (ttei), 1,3,5-tris[((1,3-carboxylic acid-5-(4 (ethynyl)phenyl))ethynyl)phenyl]-benzene, 3,3',3",5,5',5"-benzene-1,3,5-triyl-hexabenzoate (bhb), 4,4',4"-tris(N,N-bis(4-carboxylphenyl)-amino)triphenylamine (H6tta), 1,3,5-tris[(1,3-di(4'-carboxylic acid-phenyl)-phenyl)-5-ethynyl]benzene] (H6L1), tris-(4-(5'-ethynyl-1,1':3,1"-terphenyl-4,4"-dicarboxylic acid)-phenyl)-amine] (H6L2), 1,1':3,1"-terphenyl-4,4"-dicarboxylate.

and/or wherein the organic linkers comprise one or more metallo linkers, such as one or more of the group consisting of [FeFe]-1,4-dicarboxylbenzene- 2,3-dithiolate (dcbdt), Cu(I)- 1,10-phenanthroline-based linker, 5,10,15,20-Tetrakis(4-carboxyphenyl)porphyrin metalloporphrin linker (tcpp), Au(I)-4,4',4",4'''-(1,2-phenylenebis(phosphanetriyl))-tetrabenzoate (pbptbc), 4,7-bis(4-carboxylphenyl)-1,3-dimethyl-benzimidazolium-tetrafluoroborate, [(R,R)-(2)-1,2-cyclohexanediamino-N,N'-bis(3-tert-butyl-5-(4-pyridyl)salicylic-dene)-Mn(III)Cl].

and/or wherein the organic linkers comprise one or more octatopic carboxylate linkers, such as one or more of the group consisting of 5,5',5",5'''-silanetetrayltetraisophthalate (L6), 1,1'-binaphthyl-derived octacarboxylate linkers, 2,2'-diethoxy-1,1'binapthyl-4,4',6,6'-tetracarboxylic acid (L12) and elongated L12 (L13, wherein a -C=C- moiety is present in each arm of L12).

and/or wherein the organic linkers comprise one or more N-heterocyclic linkers such as one or more of the group consisting of 2,5-bis-(2-hydroxyethoxy)-1,4-bis(4-pyridyl)benzene, 4,4'-dipyridylacetylene (dpa), pyrazine, imidazolate or derivative thereof, such as 1,4-bis(imidazolyl)-benzene and 1,5-bis(imidazol-1-ylmethyl)naphthalene, imidazole (Him), 2-methylimidazole, 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chloro-benzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine pyrazole (Hpz), 1,2,4-triazole (Htz), 1,2,3-triazole (Hta), and tetrazole (Httz), 5-chlorobenzimidazolate (cblm), 1,3,5-tris(1H-pyrazol-4-yl)benzene, 2,2'-bipyridine (BIPY), 2-phenylpyridine-5,4-dibenzoate (PPY-DC), 2,2 bipyridine-5,5-dibenzoate (BPY-DC).

and/or wherein the organic linkers comprise one or more phosphonate linkers, such as one or more of the group consisting of phosphonate-oxalate, alkylphosphonic acids wherein alkyl is C1 to C10, such as methylphosphonic acid, $(H_2O_3P(CH_2)_nPO_3H_2)$ (Cn)) wherein n is 1 to 10, methylenebisphosphonate, alkylbis(phosphonic acid); methylenebis(phosphonic acid), N,N'-piperazinebis(methylenephosphonic acid), para-sulfonylphenylphosphonic acid, N,N'-4,4'-bipiperidinebis(methylenephosphonic acid), N,N'-piperazinebis(methylenephosphonic acid), N,N'-2-methylpiperazinebis(methylenephosphonic acid), arylphosphonate, 4-carboxyphenylphosphonic acid (4-cppH3), 1,3,5-benzenetris(phosphonic acid), tris-1,3,5-(4-phosphonophenyl)- benzene (H6L), biphenylbisphosphonate, bipyridylphosphonates, methylphosphonates, or functionalised phosphate linkers, such as 2' -bipyridyl-5,5'-bis(phosphonic acid).

and/or wherein the organic linkers comprise one or more sulphonates, such as one or more of the group consisting of 4-biphenylsulfonate, 2-naphthalenesulfonate, 1-naphthalenesulfonate, 1-pyrenesulfonate, 1,5- naphthalenedisulfonate, 2,6-naphthalenedisulfonate, 1-naphthalene sulfonate, p-toluenesulfonate and 1,3,6,8- pyrenetetrasulfonate; 1,3,5-tris(sulfonomethyl)benzene; α, α', α''', α''''-durenetetrasulfonate, 1,3,5,7-tetra(4-sulfonophenyl)adamantane, 1,3,5,7-tetra(4-sulfonophenyl)adamantane, 1,3,5,7-tetra(4-sulfonophenyl)adamantane; (4,4' - bis(sulfoethynyl)biphenyl; 4,4' -biphenyldisulfonate, p-sulfonatocalix[4]arene, p-sulfonatocalix[5]arene, p-sulfonatocalix[6]arene, p-sulfonatocalix[8]arene.

and/or wherein the organic linkers comprise one or more from the group consisting of 9,10-anthracenedicarboxylic acid, biphenyl-3,3',5,5'-tetracarboxylic acid, biphenyl-3,4',5-tricarboxylic acid, 5-bromoisophthalic acid, 5-cyano-1,3-benzenedicarboxylic acid, 2,2'-diamino-4,4'-stilbenedicarboxylic acid, 2,5-diaminoterephthalic acid, 2,2'-dinitro-4,4'-stilbenedicarboxylic acid, 5-ethynyl-1,3-benzenedicarboxylic acid, 2-hydroxyterephthalic acid, 3,3',5,5'-azobenzene tetracarboxylic acid, [1,1'-biphenyl]-4,4'-dicarboxylic acid, 2,5-dihydroxyterephthalic acid, 2,6-naphthalenedicarboxylic acid, 1,4-phenylenediacetic acid, 1,1,2,2-tetra(4-carboxylphenyl)ethylene, 1,3,5-tricarboxybenzene, 1,3,5-tris(4-carboxyphenyl)benzene, 1,4-di(4'-pyrazolyl)benzene, 1,4,7,10-teraazaacyclododecane-N,N',N'',N'''-tetraacetic acid, 2,4,6-(tri-4-pyridinyl)-1,3,5-triazine, tris(isobutylaminoethyl)amine, 2-(diphenylphosphino)terephthalic acid.

8. A membrane, method or composition according to any preceding claim, wherein the MOF has a surface area of at least 10 $m^2/g$, such as 100 to 9,000 $m^2/g$, preferably 100 to 8,000 $m^2/g$ or 500 to 8,000 $m^2/g$.

and/or wherein the MOF is in the form of porous flakes or particles.

and/or wherein the MOF has an average pore size of from 0.1 nm to 1000nm, 0.1 to 950nm, 0.2 to 900nm, 0.2 to 850nm, preferably 0.2 to 800nm, 0.3 to 700nm, preferably 0.4 to 650, 0.4 to 550nm, 0.5 to 500 nm, 0.5 to 450nm, 0.2 nm to 100 nm, such as between 0.2 to 90 nm, 0.3 nm to 75nm, 0.4nm to 50nm, for example 0.4nm to 40nm, 0.4nm to 30nm, or 0.4nm to 20nm, suitably 0.4nm to 15nm, 0.4nm to 10nm.

and/or wherein the MOF comprises a functional group, preferably the functional group is selected from one or more of the group consisting of $-NH_2$, -Br, -Cl, -I, $-(CH_2)_n-CH_3$ wherein n is 1 to 10, such as $CH_3CH_2CH_2O-$, $CH_3CH_2CH_2CH_2O-$, ben-$C_4H_4$, methyl, -COOH, -OH, for example, the MOF may be an IRMOF, such as IRMOF-1, IRMOF-2, IRMOF-3, IRMOF-4, IRMOF-5, IRMOF-6, IRMOF-7, IRMOF-8, IRMOF-9, IRMOF-10, IRMOF-16, IRMOF-11, IRMOF-12, IRMOF-13, IRMOF-14, IRMOF-15; and/or a CAU, such as CAU-10-OH, CAU-10-$NH_2$, CAU-10-H, CAU-10-$CH_3$; and/or MIL-125-NH2; and/or UiO-66(Zr)-(CH3)2.

and/or wherein the MOF is selected from one or more of Zr-DUT-51, Hf-DUT-51, PCN-777, NU-1105, DUT-52, DUT-53, DUT-84, DUT-67, DUT-68, DUT-69, DUT-6, such as MIL-125 (Fe, Cr, Al, V), MIL-53 (Fe, Cr, Al, V), MIL-47(Fe, Cr, Al, V), UAM-150, UAM-151, UAM-152, Zr(O3PC12H8PO3), Zr Bipyridylphosphonates, Zr Methylphosphonates, Sn(IV) Bipyridylphosphonates, Sn(IV) Methylphosphonates, [Ag(4-biphenylsulfonate)]∞, [Ag(2-naphthalenesulfonate)] ∞, [Ag(H2O)0.5(1-naphthalenesulfonate)] ∞, [Ag(1-naphthalenesulfonate)] ∞ and [Ag(1-pyrenesulfonate)] ∞, $UO_2(O_3PC_6H_5)_3 0.7H_2O$, $(UO_2)_3(HOPC_6H_5)_2$-$(O_3PC_6H_5)_2 3H_2O$, SAT-16, SAT-12 ($Mn^{2+}$, $Fe^{2+}$, $Co^{2+}$, $Ni^{2+}$), MIL-91 ($Al^{3+}$, $Fe^{3+}$, $In^{3+}$, $V^{3+}$), STA-13 ($Y^{3+}$, $Sc^{3+}$, $Yb^{3+}$, $Dy^{3+}$), VSN-3 (with $-CH_2$- units ranging from 1 to 10) , VSB-4 (with $-CH_2$- units ranging from 1 to 10), ZIF-95, ZIF-100, $M_3(btp)_2$ (M = Ni,Cu, Zn, and Co; H3btp = 1,3,5-tris(1H-pyrazol-4-yl)benzene), IRMOF-76, IRMOF-77, PCM-18, MOF-1040, MOF-253_0.08PdCl$_2$, MOF-253_0.83PdCl$_2$, MOF-253_0.97Cu(BF$_4$)$_2$, NOTT-115, UMCM-150, UMCM-154, MOF-5, FJI-1, MOF-100, MOF-177, MOF-210, UMCM-1, UMCM-2, UMCM-3, UMCM-4, UMCM-8, UMCM-9, MTV-MOF-5, L6-L11; PCN-80, UNLPF-1, NOTT-140, UTSA-34a, UTSA-34b, MODF-1, SDU-1, NPG-5, UTSA-20, NU-100, NU-110E, PCN-61, PCN-66, PCN-69, PCN-610, DUT-49, PCN-88, NOTT-300, NOTT-202, NOTT-104, PCN-46, PCN-14, NOTT-100, NOTT-101, NOTT-103, NOTT-109, NOTT-111, ZSA-1, ZSA-2, NOTT-12, NOTT-16, POMF-Cu ([Cu$_{24}$L$_8$(H$_2$O)$_{24}$], MIL-59, PCN-12, PCN-12', DUT-75, DUT-76, PCN-16, PCN-16', PCN-511, IMP-11, PCN-512, IMP-9, MOF-11, MOF-36, Hf-PCN-523, PCN-521, MOF-177, MOF-180, MOF-200, SNU-150, MOF-14, MOF-143, MOF-388, MOF-399, UiO-88, MOF-1001, IRMOF-62, MOF-101, IRMOF-74, CAU-10-OH, CAU-10-$NH_2$, CAU-10-H, CAU-10-$CH_3$, CAU-10, CALF-25, Zn-DMOF, Co-DMOF, DUT-4, SAPO-34, SBA-15, HZSM-5, MCM-41, KIT-1, MCM-48, Zn-MOF-74, Ni-MOF-74, Mg-MOF-74, PCN-228, PCN-229, PCN-230, MOF-808, MIL-160, MIL-163, FJI-H6, [Zr6O4(OH)4(btba)3](DMF)x(H2O)y, wherein x is 0 to <20 and y is 0 to <20, FJI-H7, lanthanide element-based [La(pyzdc)1.5(H2O)2]2H2O, [Dy(Cmdcp)(H2O)3](NO3)2H2O)n, [Eu(HL)(H2O)2]n2H2O, Tb-DSOA, [Tb(L)(OH)]x(slov), ([Tb(L1)1.5(H2O)]3H2O, In-based JLU-Liu18, Al-based MIL-121, MAF-6, MAF-7, MAF-49, MAF-X8, [Zn12(trz)20][SiW12O40]11H2O, Zn2TCS(4'4-bipy), Zn-pbdc-11a(bpe)/-12a(bpe)/-12a(bpy), Zn(IM)1.5(abIM)0.5, ([Zn(C10H2O8)0.5(C10S2N2H8)]5H2O))n, Co/Zn-BTTBBPY, PCN-601, Mg-CUK-1, [Cd2(TBA)2(bipy)(DMA)2], Cu6(trz)10(H2O)4[H2SiW12O40}8H2O, [Ni(BPEB)], [Eu3(bpydb)3(HCOO)(u3-OH)2(DMF)](DMF)3(H2O)2, MAF-X25, MAF-X27, MAF-X25ox, MAF-27ox, PCN-101, NH2-MIL-125(Ti), Cu(I)-MOF, AEMOF-1, PCN-222, Cd-EDDA, [Cd2L2]NMPMEOH, Eu/UiO-66-(COOH)2, Eu/CPM-17-Zn, Eu/MIL-53-COOH(Al), [Ln(HL)(H2O)2]n2H2O, Eu3+@MIL-124, ([Tb(L1)1.5(H2O)]3H2O)n, [Tb(I)(OH)]x(solv), bio-MOF-1, BFMOF-1, NENU-500, Co-ZIF-9, Al2(OH)2TCPP-Co, Al-MIL-101-NH-Gly-Pro, UiO-66-CAT, Pt/UiO-66, HPW@MIL-101, POM-ionic-liquid-functionalized MIL-100, sulphated MIL-53, MIL-101(Cr)-NO2, NENU-1/12-tungstosilicic acid, Na-HPAA, PCMOF-10, Ca-PiPhtA, (NH4)2(adp)[Zn2(ox)3]3H2O, ([Zn(C10H2O8)0.5(C10S2N2H8)]5H2O])n, ([[(Me2NH2]3(SO4)2[Zn2(ox)3])n, UiO-66-(SO3H)2, Tb-DSOA, [La3L4(H2O)6]ClxH2O, CALF-25, (Cu2I2)[Cu2PDC2-(H2O)2]2[Cu(MeCN)4]IDMF, (Cu4I4)[Cu2PDC2-(H2O)2]4DMF, (Cu2I2)[Cu3PDC3-(H2O)2]2MeCN)2DMF, ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, UiO-68., MOF-801, MOF-841, [Co4L3(u3-OH)(H2O)3](SO4)0.5, MOF-802, Cu-BTTri, PCN-426, MOF-545, Zn(1,3-BDP), [(CH3)2NH2]2[Eu6(u3-OH)8(1,4-NCD)6(H2O)6], NiDOBDC, Al(OH)(2,6-ndc) (ndc is naphthalendicarboxylate), MOF-525, MOF-535.

9. A membrane, method or composition according to any preceding claim, wherein the MOF is selected from one or more of zeolitic imidazolate frameworks (ZIFs), suitably a ZIF formed from a metal salt of Zn, Co, Cd, Li, or B, with an imidazole based linker, such as ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100, ZIF-8, ZIF-9, H-ZIF-8-11, H-ZIF-8-12, H-ZIF-8-14, ZIF-8-MeOH, ZIF-25, ZIF-71, ZIF-93, ZIF-96, ZIF-97 and their derivatives, preferably the MOF is selected from one or more of ZIF-1, ZIF-3, ZIF-4, ZIF-6, ZIF-10, ZIF-11, ZIF-12, ZIF-14, ZIF-20, ZIF-22, ZIF-9-67, ZIF-60, ZIF-67, ZIF-68, ZIF-69, ZIF-74, ZIF-76, ZIF-77, ZIF-78, ZIF-79, ZIF-80, ZIF-81, ZIF-82, ZIF-90, ZIF-95, ZIF-100.

   typically, wherein the ZIF is formed of repeating units of (M-lm-M), wherein M is Zn or Co, and Im is imidazole or a derivative thereof which bridges the metal units, preferably in a tetrahedral coordination,
   and/or typically, wherein the imidazole or its derivative unit is selected from one or more of imidazole (ZIF-4 linker), 2-methylimidazole (ZIF 8 linker), 2-ethyl imidazole, 2-nitro imidazole, 4-isocyanoimidazole, 4,5-dichloroimidazole, imidazole-2-carbaldehyde, imidazo[4,5-b]pyridine, benzo[d]imidazole, 6-chloro-benzo[d]imidazole, 5,6-dimethyl-benzo[d]imidazole, 6-methyl-benzo[d]imidazole, 6-bromo-benzo[d]imidazole, 6-nitro-benzo[d]imidazole, imidazo[4,5-c]pyridine, purine.

10. A membrane, method or composition according to any preceding claim, wherein the MOF is selected from one or more UiO MOFs, such as UiO-66, for example Eu/UiO-66-(COOH)2, UiO-66-CAT, Pt/UiO-66, UiO-66-(SO3H)2, UiO-67, UiO-68, UiO-88 and their derivatives, preferably the UIO-66 MOF is Eu/UiO-66-(COOH)2, UiO-66-CAT, Pt/UiO-66, UiO-66-(SO3H)2, more preferably the MOF comprises UiO-68 or UiO-88.

   typically, wherein the UiO MOF is zirconium 1,4-dicarboxybenzne MOF (UiO 66), preferably zirconium 1,4-dicarboxybenzne MOF comprised of Zr6O4(OH)4, octahedral, 12-fold connected to adjacent octahedra through a 1,4-benzenedicarboxylate (BDC) linker, and/or one or more of zirconium aminobenzenedicarboxylate MOF (UiO-66-BDC-NH2), zirconium benzenedicarboylate (UiO-66-BDC), zirconium biphenyldicarboxylate MOF (UiO-66-BPD/UiO-67), zirconium fumarate MOF (UiO-66-FA, FA:Zr = 0.66-0.98), zirconium trans-1,2-ethylenedicarboxylic acid MOF (UiO-66-FA, FA:Zr=1), zirconium trimellitate MOF (UiO-66-BDC-COOH, BDC-COOH:Zr=0.9-1.0).
   and/or wherein the MOF is selected from one or more of MOF-74, such as Zn-MOF-74, Ni-MOF-74, Mg-MOF-74.
   and/or wherein the MOF is selected from one or more of Cu-BTTri, MIL-53 (Al), MIL-101(Cr), PCN-426-Cr(III), [(CH3)2NH2]2[Eu6(u3-OH)8(1,4-NCD)6(H2O)6], Zn(1,3-BDP), MOF-808, DUT-69, DUT-67, DUT-68, PCN-230, PCN-222, MOF-545, MOF-802, and HKUST-1, preferably the MOF is selected from one or more of MOF-808, PCN-230, PCN-222 and HKUST-1, more preferably one or more of MOF-808, PCN-230, PCN-222.

and/or wherein the MOF is hydrophobic, preferably the hydrophobic MOF is selected from one or more of MIL-101(Cr), NiDOBDC, HKUST-1, Al(OH)(2,6-ndc) (ndc is naphthalendicarboxylate), MIL-100-Fe, UiO-66, ZIF family, such as ZIF 71, ZIF 74, ZIF-1, ZIF-4, ZIF-6, ZIF-9, and ZIF 8.

and/or wherein the MOF comprises an adsorption promoting MOF, for example UiO-66 or UiO-66-NH2, preferably UiO-66-NH2.

and/or wherein the MOF is a zirconium based MOF, such as UiO - 66 (Zr), UiO - 67 (Zr), and UiO - 68 (Zr), MOF-525 (Zr6O4(OH)4(TCPP-H2)3, MOF-535 (Zr6O4(OH)4(XF)3, and MOF 545 (Zr6O8(H2O)8(TCPP-H2)2, where porphyrin H4-TCPP-H2 = (C48H24O8N4) and cruciform H4-XF=(C42O8H22), preferably UiO - 68 (Zr) or MOF-525, most preferably UiO-68.

and/or wherein the MOF comprises functional groups selected from one or more of amine, aldehyde, alkynes, and/or azide.

and/or wherein the MOF is UiO-66-NH2 and/or the MOF is sulfone group-containing iso IRMOF-16.

11. A membrane, method or composition according to any preceding claim, wherein the coating composition comprises MOF precursors, such as one or more of a SBU or node precursor, suitably in the form of a salt, and organic ligand or precursor thereof.

and/or wherein the coating composition comprises, or is formed from a metal salt, such as one or more of an aluminium salt, ammonium salt, antimony salt, arsenic salt, barium salt, beryllium salt, bismuth salt, cadmium salt, calcium salt, cerium salt, cesium salt, chromium salt, cobalt salt, copper salt, dysprosium salt, erbium salt, europium salt, gadolinium salt, gallium salt, germanium salt, gold salt, hafnium salt, holmium salt, indium salt, iridium salt, iron salt, lanthanum salt, lead salt, lithium salt, lutetium salt, magnesium salt, manganese salt, mercury salt, molybdenum salt, neodymium salt, nickel salt, niobium salt, osmium salt, palladium salt, platinum salt, potassium sal, praseodymium salt, rhenium salt, rhodium salt, rubidium salt, ruthenium salt, samarium salt, scandium salt, selenium salt, silver salt, sodium salt, strontium salt, sulfur salt, tantalum salt, tellurium salt, terbium salt, thallium salt, thorium salt, thulium salt, tin salt, titanium salt, tungsten salt, vanadium salt, ytterbium salt, yttrium salt, zinc salt, zirconium salt.

and/or wherein the organic ligand precursor is any one or more of the organic linkers according to claim 7.

and/or wherein the MOF is dispersed or suspended in a carrier, suitably a carrier liquid, in the coating composition.

typically, wherein the liquid carrier is selected from one or more of water, ethanol, propanol, glycol, tertiary butanol, acetone, dimethyl sulfoxide, mixture of dimethyl sulfoxide/alcohol/glycol, water/alcohol/glycol, glycol/water/tertiary butanol, water/acetone mixtures, water/ethanol mixtures, N,N-dimethylformamide, N,N-diethylformamide, dimethylsulfoxide (DMSO), ethylene glycol (EG), N-methyl-2-pyrrolidone, isopropyl alcohol, mineral oil, dimethylformamide, terpineol, ethylene glycol, or mixtures thereof, preferably, water/ethanol, such as 50/50 vol% water/ethanol, water optionally with one or more stabiliser, such as lithium oxide; N-methyl-2-pyrrolidone (NMP), N,N-dimethylformamide, N,N-diethylformamide or terpineol, most preferably, water:ethanol, such as 50:50 vol% water/ethanol, N,N-dimethylformamide, N,N-diethylformamide.

12. A membrane or method according to any preceding claim, wherein the method comprises deposition, such as pressure deposition, gravity deposition or vacuum deposition of the coating composition comprising one or more MOFs.

typically, wherein the concentration of the MOF or mixture thereof in the coating composition is from 0.001 mg/ml to 10 mg/ml, such as from 0.01 mg/ml to 7mg/ml or from 0.1 mg/ml to 6mg/ml, or preferably from 0.1 to 5 mg/ml.

and/or wherein the substrate is a polymeric substrate selected from one or more of polyamide (PA), polysulphone (PSf), polyvinylidene fluoride (PVDF), polycarbonate (PC), cellulose acetate (CA), tricellulose acetate (TCA), and thin film composites (TFC), such as polysulphone supported polyamide composite substrate, preferably, the polymeric substrate is selected from one or more of polyamide (PA), polysulphone (PSf), and thin film composite (TFC), such as polysulphone supported polyamide composite substrate.

and/or wherein substrate is a ceramic substrate selected from one or more of zeolite, titanium oxide, alumina, zirconia, preferably, the ceramic substrate is selected from one of zeolite, titanium oxide, and zirconia, such as zeolite and zirconia.

and/or wherein the viscosity of the coating composition is from 1 to 120 cPa, preferably 1 to 75 cPa, such as 5 to 45 cPa and/or the surface tension of the coating composition for deposition is from 1 to 200mN/m, such as from 20 to 100 mN/m.

13. A membrane or method according to any of claims 1 to 11, wherein the method comprises printing, preferably inkjet printing, the coating composition comprising the MOF onto the substrate.

> typically, wherein the substrate is a porous polymeric film, more preferably a polymeric porous film treated prior to the addition of the coating composition.
> and/or wherein the substrate is selected from one or more of polyamide (PA), polysulphone (PSf), polycarbonate (PC), polyvinylidene fluoride (PVDF), cellulose acetate (CA), tricellulose acetate (TCA) and thin film composites (TFC), such as polysulphone supported polyamide composite film, preferably, the substrate is selected from one or more of polyamide (PA), polysulphone (PSf), and thin film composite (TFC), such as polysulphone supported polyamide composite film.
> and/or wherein the concentration of the MOF in the coating composition is from 0.05 mg/ml to 5 mg/ml, such as from 0.1 mg/ml to 3mg/ml or from 0.3 mg/ml to 2mg/ml, or preferably from 0.5 to 2 mg/ml.
> and/or wherein the viscosity of the coating composition for printing is from 1 to 20cPa, preferably 5 to 15 cPa, such as 8 to 14 cPa, and/or the surface tension of the coating composition for printing is from 1 to 150mN/m, such as from 25 to 80 mN/m.

14. A membrane, method or composition according to any preceding claim, wherein the membrane is for water treatment, such as water desalination, oil/water separation; molecule separation, protein separation, contaminates adsorption, pharmaceutical filtration for removal of pharmaceutical residues in the aquatic environment; biofiltration, for example separation between micro-organisms and water; desalination or selective ion filtration; and nuclear waste water filtration for removal of nuclear radioactive elements from nuclear waste water; for blood treatment such as physiological filtration to replace damaged kidney filter and blood filtration; and/or separation of bio-platform molecules derived from sources such as plants, for example a grass, preferably the membrane is for water treatment, such as desalination or oil and water separation, or for pharmaceutical filtration, or for dye removal, more the membrane is for water treatment.

15. Use of a membrane according to any preceding claim for water treatment, such as water desalination, oil/water separation; molecule separation, protein separation, contaminates adsorption, pharmaceutical filtration for removal of pharmaceutical residues in the aquatic environment; biofiltration, for example separation between micro-organisms and water; desalination or selective ion filtration; and nuclear waste water filtration for removal of nuclear radioactive elements from nuclear waste water; for blood treatment such as physiological filtration to replace damaged kidney filter and blood filtration; and/or separation of bio-platform molecules derived from sources such as plants, for example a grass, preferably the membrane is for water treatment, such as desalination or oil and water separation, or for pharmaceutical filtration, or for dye removal, more the membrane is for water treatment.